# EUROPEAN PATENT APPLICATION

(11) **EP 3 547 100 A2**
(43) Date of publication of application: **02.10.2019**
(21) Application number: 17873608.8
(22) Date of filing: 18.04.2017
(51) Int. Cl.: G06F 3/0488, G06F 3/0481, G06F 3/0482, G06F 3/0486, H04M 1/725

(54) **MOBILE TERMINAL AND METHOD FOR OPERATING SAME**

(30) Priority: 24.11.2016 KR 20160157419
(71) Applicant: LG Electronics Inc., Seoul 07336 (KR)
(72) Inventor: LEE, Eunhye, Seoul 06772 (KR); CHOI, Kyungdong, Seoul 06772 (KR); JANG, Juhee, Seoul 06772 (KR)
(74) Representative: Vossius & Partner Patentanwälte Rechtsanwälte mbB
(86) International application number: PCT/KR2017/004159
(87) International publication number: WO 2018/097421

(57) **Abstract**

A mobile terminal according to an embodiment of the present invention comprises: a display unit, a touch screen for sensing a drag and touch input; and a controller for controlling the operation of the mobile terminal, wherein the controller controls to display a 2D image of a first home screen on the display unit, senses a drag touch input from a first point to a second point on the first home screen, convert the 2D image of the first home screen to a 3D image and displays the 3D image.

## Description

### [TECHNICAL FIELD]

The present disclosure relates to a mobile terminal and a method for operating the same.

### [BACKGROUND]

Digital display device services using wired or wireless communication networks are becoming popular. The digital display device service may provide various services that cannot be provided by the existing analog broadcasting service.

For example, a IP display device (Internet Protocol Television) or smart display device service, which is a kind of the digital display device service provides a bidirectional service in which the user can actively select a type of viewing program, viewing time, and the like. The IP display device service, and smart display device service may provide various additional services such as Internet search, home shopping, online game, etc. based on the bidirectional service.

In recent years, very small devices have been developed and released. A touch screen for inputting a user key is included in the very small devices so that the size of the device may be smaller. Various characters or symbols may be freely input and written on the touch screen using a user's hand or a character input pen.

Further, with the use of a mobile terminal that accommodates a variety of application functions, multi-functions are being added to the portable terminal. To this end, the demand for functions provided by the portable information terminals themselves is further increasing. Further, when various functions are applied to the portable information terminal, there is an increasing demand for the functions such as searching and manipulating of images, moving images, etc. as implemented based on the functions. In order to enable the user to perform the functions provided as described above, a separate function key may be provided or a plurality of key input operations may be performed. Thus, there is a problem in that the volume and cost of the device are increased and such operations are troublesome.

Therefore, there is a need for the user to be able to perform the functions provided by the portable information terminal by the user inputting simple characters or symbols using a character input pen or the like. Further, researches on user interface for user convenience and more efficient use of various application functions are being actively conducted.

### [DISCLOSURE]

### [TECHNICAL PURPOSE]

One purpose of the present disclosure is to provide a method for providing a new user interface for user convenience in a mobile terminal and to provide a mobile terminal with the user interface.

Another purpose of the present disclosure is to ensure that start and end points of a drag trace are positioned at four corners so that the user interface is implemented more accurately.

Still another purpose of the present disclosure is to ensure that menus is more easily displayed on the mobile terminal such that the convenience of the mobile terminal user is improved.

### [TECHNICAL SOLUTION]

In one aspect of the present disclosure, there is proposed a mobile terminal comprising: a display unit; a touch screen for detecting drag input and touch input; and a controller configured for controlling an operation of the mobile terminal, wherein the controller is configured to: control the display unit to display a 2-dimensional (2D) image of a first home screen thereon; detect, using the touch screen, a drag trace from a first point to a second point on the first home screen; and convert the 2D image of the first home screen into a 3-dimensional (3D) image of the first home screen and control the display unit to display the 3D image thereon.

In one embodiment of the mobile terminal, when a drag direction from the first point to the second point is downwards, the 3D image of the first home screen is a second home screen. The controller is configured to control the display unit to display an information widget near a top of the second home screen.

In one embodiment of the mobile terminal, the first home screen and the second home screen contain the same content.

In one embodiment of the mobile terminal, the information widget displays at least one of real-time news information, sports broadcast information, weather information, and schedule information.

In one embodiment of the mobile terminal, when a drag direction from the first point to the second point is upwards, the 3D image of the first home screen is a third home screen. The controller is configured to control the display unit to display a menu widget near a bottom of the third home screen.

In one embodiment of the mobile terminal, the first home screen and the third home screen contain the same content.

In one embodiment of the mobile terminal, the menu widget displays at least one of a mirror function menu, a favorites application list menu, a system memory menu, and a flashlight menu.

In one embodiment of the mobile terminal, when the touch screen senses a drag trace from a third point to a fourth point on the 3D image of the first home screen, and when a drag direction from the third point to the fourth point is opposite to a drag direction from the first point to the second point, the controller is configured to convert back the 3D image to the 2D image of the first home screen and control the display unit to display the 2D image.

In one aspect of the present disclosure, there is proposed a method for controlling a mobile terminal, the method comprising: displaying a 2-dimensional (2D) image of a first home screen on a display unit; detecting a drag trace from a first point to a second point on the first home screen; and converting the 2D image of the first home screen into a 3-dimensinal (3D) image of the first home screen and displaying the 3D image on the display unit.

In one embodiment of the method, when a drag direction from the first point to the second point is downwards, the 3D image of the first home screen is a second home screen. The method further includes displaying an information widget near a top of the second home screen.

In one embodiment of the method, the first home screen and the second home screen contain the same content.

In one embodiment of the method, the information widget displays at least one of real-time news information, sports broadcast information, weather information, and schedule information.

In one embodiment of the method, when a drag direction from the first point to the second point is upwards, the 3D image of the first home screen is a third home screen. The method further includes displaying a menu widget near a bottom of the third home screen.

In one embodiment of the method, the first home screen and the third home screen contain the same content.

In one embodiment of the method, the menu widget displays at least one of a mirror function menu, a favorites application list menu, a system memory menu, and a flashlight menu.

In one embodiment of the method, when the touch screen senses a drag trace from a third point to a fourth point on the 3D image of the first home screen, and when a drag direction from the third point to the fourth point is opposite to a drag direction from the first point to the second point, the method further includes converting back the 3D image to the 2D image of the first home screen and controlling the display unit to display the 2D image.

### [TECHNICAL EFFECT]

According to one of the various embodiments of the present disclosure, a method for providing a new user interface for user convenience in a mobile terminal and to provide a mobile terminal with the user interface may be obtained.

According to another embodiment of the various embodiments of the present disclosure, problems related to the limitation of the number of keypads and difficulty in a precise manipulation due to the size constraint of a small mobile terminal using a touch screen may be removed. That is, the user may perform various functions according to the drag trace on the touch screen to diversify the functions of the keypad and enable precise touch manipulation.

According to still another embodiment of the various embodiments of the present disclosure, a menu representing the desired function may be readily displayed on the mobile terminal. That is, the mobile terminal can determine and display a hidden menu in response to a multi-touch, a single-drop, and a single touch, such that a specific function can be more easily accessed by the user.

### [BRIEF DESCRIPTION OF DRAWINGS]

FIG. 1 is a block diagram illustrating a mobile terminal according to an embodiment of the present disclosure.
FIGs 2a, 2b, 2c, 2d, and 2e illustrate touch gestures according to an embodiment of the present disclosure.
FIG. 3 is a flow chart of a control method of a mobile terminal according to the present disclosure.
FIG. 4a and FIG. 4b show an embodiment in which when a microphone is activated in a touch-screen illumination disabled state, a voice-related function is executed according to an additional user gesture.
FIG. 5a and FIG. 5b show an example in which a function execution in response to a touch applied after an execution screen of a function corresponding to a voice command is output.
FIG. 6 and FIG. 7 show drag traces in a user interface implementation using a drag according to an embodiment of the present disclosure.
FIG. 8 and FIG. 9 are flow diagrams of a user interface implementation method using drag on a mobile terminal in accordance with an embodiment of the present disclosure.
FIG. 10 is a block diagram illustrating a mobile terminal with a user interface using drag on the mobile terminal according to another embodiment of the present disclosure.
FIG. 11 is a block diagram illustrating a configuration of a mobile terminal according to another embodiment of the present disclosure.
FIG. 12 is a flowchart showing a menu display procedure on a mobile terminal according to an embodiment of the present disclosure.
FIG. 13 to FIG. 17 are example views showing screens displayed when a menu display procedure is conducted on a mobile terminal according to an embodiment of the present disclosure.
FIG. 18 to FIG. 26 illustrate various examples in which a mobile terminal outputs a plurality of home screens via a drag operation according to another embodiment of the present disclosure.

### [DETAILED DESCRIPTIONS]

Hereinafter, embodiments of the present disclosure are described in more detail with reference to accompanying drawings. The suffixes "module" and "unit" for components used in the description below are assigned or mixed in consideration of easiness in writing the specification and do not have distinctive meanings or roles by themselves. In the following description, detailed descriptions of well-known functions or constructions will be omitted since they would obscure the invention in unnecessary detail. Additionally, the accompanying drawings are used to help easily understanding embodiments disclosed herein but the technical idea of the present disclosure is not limited thereto. It should be understood that all of variations, equivalents or substitutes contained in the concept and technical scope of the present disclosure are also included.

A mobile terminal according to an embodiment of the present disclosure is, for example, an intelligent mobile terminal that contains a computing support function in addition to a broadcast reception function. The mobile device conducts reliably the broadcast reception function, and has Internet function. To this end, the mobile device has a more convenient interface such as a handwriting input device, a touch screen or a space remote control device. Furthermore, as the mobile device supports the wired or wireless Internet function, the mobile device may access the Internet and the computer, and perform functions such as e-mail, web browsing, banking or games. A standardized general-purpose OS may be used for these various functions.

Therefore, in the mobile terminal as described in the present disclosure, various applications may be freely added to or deleted from, for example, a general-purpose OS kernel, so that various user-friendly functions may be performed. More specifically, the mobile terminal may be, for example, a network display device, an HBB display device, a smart display device, an LED display device, an OLED display device, and the like, and may be applicable as a smartphone in some cases.

Mobile terminals described in this specification may include mobile phones, smartphones, laptop computers, terminals for digital broadcast, personal digital assistants (PDAs), portable multimedia players (PMPs), navigation systems, slate PCs, tablet PCs, ultrabooks, and wearable devices (for example, smart watches, smart glasses, and head mounted displays (HMDs)).

However, it is apparent to those skilled in the art that configurations according to embodiments of the present disclosure disclosed in this specification are applicable to stationary terminals such as digital TVs, desktop computers, and digital signage, except for the case applicable to only mobile terminals.

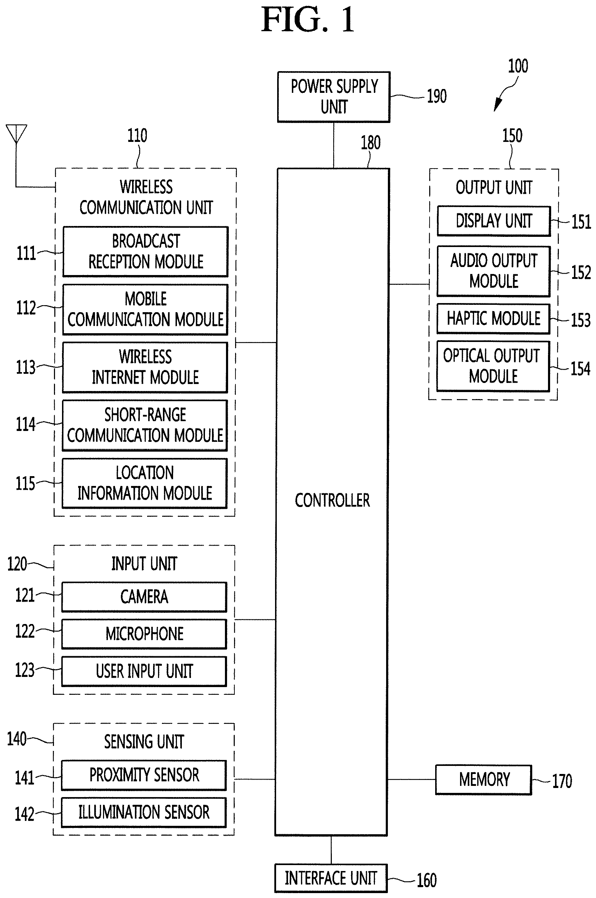

FIG. 1 is a block diagram illustrating a mobile terminal according to an embodiment of the present disclosure.

The mobile terminal 100 may include a wireless communication unit 110, an input unit 120, a sensing unit 140, an output unit 150, an interface unit 160, a memory 170, a controller or controller 180, and a power supply unit 190. In implementing a mobile terminal, components shown in Fig. 1 are not necessary, so that a mobile terminal described in this specification may include components less or more than the components listed above.

In more detail, the wireless communication unit 110 in the components may include at least one module allowing wireless communication between the mobile terminal 100 and a wireless communication system, between the mobile terminal 100 and another mobile terminal 100, or between the mobile terminal 100 and an external server. Additionally, the wireless communication unit 110 may include at least one module connecting the mobile terminal 100 to at least one network.

The wireless communication unit 110 may include at least one of a broadcast receiving module 111, a mobile communication module 112, a wireless Internet module 113, a short-range communication module 114, and a location information module 115.

The input unit 120 may include a camera 121 or an image input unit for image signal input, a microphone 122 or an audio input unit for receiving audio signal input, and a user input unit 123 (for example, a touch key and a mechanical key)) for receiving information from a user. Voice data or image data collected by the input unit 120 are analyzed and processed as a user's control command.

The sensing unit 140 may include at least one sensor for sensing at least one of information in a mobile terminal, environmental information around a mobile terminal, and user information. For example, the sensing unit 140 may include at least one of a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, an ultrasonic sensor, an optical sensor (for example, the camera 121), a microphone (for example, the microphone 122), a battery gauge, an environmental sensor (for example, a barometer, a hygrometer, a thermometer, a radiation sensor, a thermal sensor, and a gas sensor), and a chemical sensor (for example, an electronic noise, a healthcare sensor, and a biometric sensor). Moreover, a mobile terminal disclosed in this specification may combines information sensed by at least two or more sensors among such sensors and may then utilize it.

The output unit 150 is used to generate a visual, auditory, or haptic output and may include at least one of a display unit 151, a sound output module 152, a haptic module 153, and an optical output module 154. The display unit 151 may be formed with a mutual layer structure with a touch sensor or formed integrally, so that a touch screen may be implemented. Such a touch screen may serve as the user input unit 123 providing an input interface between the mobile terminal 100 and a user and an output interface between the mobile terminal 100 and a user at the same time.

The interface unit 160 may serve as a path to various kinds of external devices connected to the mobile terminal 100. The interface unit 160 may include at least one of a wired/wireless headset port, an external charger port, a wired/wireless data port, a memory card port, a port connecting a device equipped with an identification module, an audio Input/Output (I/O) port, a video I/O port, and an earphone port. In correspondence to that an external device is connected to the interface unit 160, the mobile terminal 100 may perform an appropriate control relating to the connected external device.

Additionally, the memory 170 may store data supporting various functions of the mobile terminal 100. The memory 170 may store a plurality of application programs (for example, application programs or applications) running on the mobile terminal 100 and also data and commands for operations of the mobile terminal 100. At least part of such an application program may be downloaded from an external server through a wireless communication. Additionally, at least part of such an application program may be included in the mobile terminal 100 from the time of shipment in order to perform a basic function (for example, an incoming call, a transmission function, and a message reception) of the mobile terminal 100. Moreover, an application program may be stored in the memory 170 and installed on the mobile terminal 100, so that it may run to perform an operation (or a function) of the mobile terminal 100 by the controller 180.

The controller 180 may control overall operations of the mobile terminal 100 generally besides an operation relating to the application program. The controller 180 may provide appropriate information or functions to a user or process them by processing signals, data, and information inputted/outputted through the above components or executing application programs stored in the memory 170.

Additionally, in order to execute an application program stored in the memory 170, the controller 180 may control at least part of the components shown in Fig. 1. Furthermore, in order to execute the application program, the controller 180 may combine at least two of the components in the mobile terminal 100 and may then operate it.

The power supply unit 190 may receive external power or internal power under a control of the controller 180 and may then supply power to each component in the mobile terminal 100. The power supply unit 190 includes a battery and the battery may be a built-in battery or a replaceable battery.

At least part of the each component may operate cooperatively in order to implement operations, controls, or control methods of a mobile terminal 100 according to various embodiments of the present disclosure described below. Additionally, the operations, controls, or control methods of a mobile terminal 100 may be implemented on the mobile terminal 100 by executing at least one application program stored in the memory 170.

Hereinafter, prior to examining various embodiments implemented through the mobile terminal 100, the above-listed components are described in more detail with reference to Fig. 1.

First, in describing the wireless communication unit 110, the broadcast receiving module 111 of the wireless communication unit 110 may receive a broadcast signal and/or broadcast related information from an external broadcast management server through a broadcast channel. The broadcast channel may include a satellite channel and a terrestrial channel. At least two broadcast receiving modules for simultaneous broadcast reception for at least two broadcast channels or broadcast channel switching may be provided to the mobile terminal 100.

The mobile communication module 112 may transmit/receive a wireless signal to/from at least one of a base station, an external terminal, and a server on a mobile communication network established according to the technical standards or communication methods for mobile communication (for example, Global System for Mobile communication (GSM), Code Division Multi Access (CDMA), Code Division Multi Access 2000 (CDMA2000), Enhanced Voice-Data Optimized or Enhanced Voice-Data Only (EV-DO), Wideband CDMA (WCDMA), High Speed Downlink Packet Access (HSDPA), High Speed Uplink Packet Access (HSUPA), Long Term Evolution (LTE), and Long Term Evolution-Advanced (LTE-A)).

The wireless signal may include various types of data according to a voice call signal, a video call signal, or text/multimedia message transmission.

The wireless Internet module 113 refers to a module for wireless internet access and may be built in or external to the mobile terminal 100. The wireless Internet module 113 may be configured to transmit/receive a wireless signal in a communication network according to wireless internet technologies.

The wireless internet technology may include Wireless LAN (WLAN), Wireless-Fidelity (Wi-Fi), Wi-Fi Direct, Digital Living Network Alliance (DLNA), Wireless Broadband (WiBro), World Interoperability for Microwave Access (WiMAX), High Speed Downlink Packet Access (HSDPA), High Speed Uplink Packet Access (HSUPA), Long Term Evolution (LTE), and Long Term Evolution-Advanced (LTE-A) and the wireless internet module 113 transmits/receives data according at least one wireless internet technology including internet technology not listed above.

From the viewpoint that wireless internet access by WiBro, HSDPA, HSUPA, GSM, CDMA, WCDMA, LTE, and LTE-A is achieved through a mobile communication network, the wireless Internet module 113 performing wireless internet access through the mobile communication network may be understood as one type of the mobile communication module 112.

The short-range communication module 114 may support short-range communication by using at least one of Bluetooth™, Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The short-range communication module 114 may support wireless communication between the mobile terminal 100 and a wireless communication system, between the mobile terminal 100 and another mobile terminal 100, or between networks including the mobile terminal 100 and another mobile terminal 100 (or an external server) through wireless area networks. The wireless area networks may be wireless personal area networks.

Here, the other mobile terminal 100 may be a wearable device (for example, a smart watch, a smart glass, and an HMD) that is capable of exchanging data (or interworking) with the mobile terminal 100. The short-range communication module 114 may detect (or recognize) a wearable device around the mobile terminal 100, which is capable of communicating with the mobile terminal 100 Furthermore, if the detected wearable device is a device authenticated to communicate with the mobile terminal 100, the controller 180 may transmit at least part of data processed in the mobile terminal 100 to the wearable device through the short-range communication module 114. Accordingly, a user of the wearable device may use the data processed in the mobile terminal 100 through the wearable device. For example, according thereto, when a call is received by the mobile terminal 100, a user may perform a phone call through the wearable device or when a message is received by the mobile terminal 100, a user may check the received message.

The location information module 115 is a module for obtaining the location (or the current location) of a mobile terminal and its representative examples include a global positioning system (GPS) module or a Wi-Fi module. For example, the mobile terminal may obtain its position by using a signal transmitted from a GPS satellite through the GPS module. As another example, the mobile terminal may obtain its position on the basis of information of a wireless access point (AP) transmitting/receiving a wireless signal to/from the Wi-Fi module, through the Wi-Fi module. If necessary, the location information module 115 may perform a function of another module in the wireless communication unit 110 in order to obtain data on the location of the mobile terminal alternatively or additionally. The location information module 115 is a module for obtaining the position (or the current position) of the mobile terminal and is not limited to a module directly calculating and obtaining the position of the mobile terminal.

Then, the input unit 120 is used for inputting image information (or signal), audio information (or signal), data, or information inputted from a user and the mobile terminal 100 may include at least one camera 121 in order for inputting image information. The camera 121 processes image frames such as a still image or a video obtained by an image sensor in a video call mode or a capturing mode. The processed image frame may be displayed on the display unit 151 or stored in the memory 170. Moreover, a plurality of cameras 121 equipped in the mobile terminal 100 may be arranged in a matrix structure and through the camera 121 having such a matrix structure, a plurality of image information having various angles or focuses may be inputted to the mobile terminal 100. Additionally, the plurality of cameras 121 may be arranged in a stereo structure to obtain the left and right images for implementing a three-dimensional image.

The microphone 122 processes external sound signals as electrical voice data. The processed voice data may be utilized variously according to a function (or an application program being executed) being performed in the mobile terminal 100. Moreover, various noise canceling algorithms for removing noise occurring during the reception of external sound signals may be implemented in the microphone 122.

The user input unit 123 is to receive information from a user and when information is inputted through the user input unit 123, the controller may control an operation of the mobile terminal 100 to correspond to the inputted information. The user input unit 123 may include a mechanical input means (or a mechanical key, for example, a button, a dome switch, a jog wheel, and a jog switch at the front, back or side of the mobile terminal 100) and a touch type input means. As one example, a touch type input means may include a virtual key, a soft key, or a visual key, which is displayed on a touch screen through software processing or may include a touch key disposed at a portion other than the touch screen. Moreover, the virtual key or visual key may have various forms and may be disposed on a touch screen and for example, may include graphic, text, icon, video, or a combination thereof.

Moreover, the sensing unit 140 may sense at least one of information in a mobile terminal, environmental information around a mobile terminal, and user information and may then generate a sensing signal corresponding thereto. On the basis of such a sensing signal, the controller 180 may control the drive or control of the mobile terminal 100 or may perform data processing, functions, or operations relating to an application program installed in the mobile terminal 100. Representative sensors among various sensors included in the sensing unit 140 will be described in more detail.

First, the proximity sensor 141 refers to a sensor detecting whether there is an object approaching a predetermined detection surface or whether there is an object around by using the strength of an electromagnetic field or infrared, without mechanical contact. The proximity sensor 141 may disposed in an inner area of a mobile terminal surrounded by the touch screen or around the touch screen.

Examples of the proximity sensor 141 may include a transmission-type photoelectric sensor, a direct reflective-type photoelectric sensor, a mirror reflective-type photoelectric sensor, a high-frequency oscillation-type proximity sensor, a capacitive-type proximity sensors, a magnetic-type proximity sensor, and an infrared proximity sensor. If the touch screen is a capacitive type, the proximity sensor 141 may be configured to detect the proximity of an object by changes in an electric field according to the proximity of the object having conductivity. In this case, the touch screen (or a touch sensor) itself may be classified as a proximity sensor.

Moreover, for convenience of description, an action for recognizing the position of an object on the touch screen as the object is close to the touch screen without contacting the touch screen is called "proximity touch" and an action that the object actually contacts the touch screen is called "contact touch". A position that an object is proximity-touched on the touch screen is a position that the object vertically corresponds to the touch screen when the object is proximity-touched. The proximity sensor 141 may detect a proximity touch and a proximity touch pattern (for example, a proximity touch distance, a proximity touch direction, a proximity touch speed, a proximity touch time, a proximity touch position, and a proximity touch movement state). Moreover, the controller 180 processes data (for information) corresponding to a proximity touch operation and a proximity touch pattern, detected through the proximity sensor 141, and furthermore, may output visual information corresponding to the processed data on the touch screen. Furthermore, according to whether a touch for the same point on the touch screen is a proximity touch or a contact touch, the controller 180 may control the mobile terminal 100 to process different operations or data (or information).

The touch sensor detects a touch (or a touch input) applied to the touch screen (or the display unit 151) by using at least one of various touch methods, for example, a resistive film method, a capacitive method, an infrared method, an ultrasonic method, and a magnetic field method.

For example, the touch sensor may be configured to convert a pressure applied to a specific portion of the touch screen or changes in capacitance occurring at a specific portion into electrical input signals. The touch sensor may be configured to detect a position and area that a touch target applying a touch on the touch screen touches the touch sensor, a pressured when touched, and a capacitance when touched. Here, the touch target, as an object applying a touch on the touch sensor, may be a finger, a touch pen, a stylus pen, or a pointer, for example.

In such a manner, when there is a touch input on the touch sensor, signal(s) corresponding thereto are sent to a touch controller. The touch controller processes the signal(s) and then transmits corresponding data to the controller 180. Therefore, the controller 180 may recognize which area of the display unit 151 is touched. Herein, the touch controller may be an additional component separated from the controller 180 or may be the controller 180 itself.

Moreover, the controller 180 may perform different controls or the same control according to types of a touch target touching the touch screen (or a touch key equipped separated from the touch screen). Whether to perform different controls or the same control according to types of a touch target may be determined according to a current operation state of the mobile terminal 100 or an application program in execution.

Moreover, the above-mentioned touch sensor and proximity sensor are provided separately or combined and may thus sense various types of touches, for example, short (or tap) touch), long touch, multi touch, drag touch, flick touch, pinch-in touch, pinch-out touch, swipe touch, and hovering touch for the touch screen.

The ultrasonic sensor may recognize position information of a detection target by using ultrasonic waves. Moreover, the controller 180 may calculate the position of a wave source through information detected by an optical sensor and a plurality of ultrasonic sensors. The position of the wave source may be calculated by using the property that light is much faster than ultrasonic wave, that is, a time that light reaches an optical signal is much shorter than a time that ultrasonic wave reaches an ultrasonic sensor. In more detail, the position of the wave source may be calculated by using a time difference with a time that ultrasonic wave reaches by using light as a reference signal.

Moreover, the camera 121 described as a configuration of the input unit 120 may include at least one of a camera sensor (for example, CCD and CMOS), a photo sensor (or an image sensor), and a laser sensor.

The camera 121 and the laser sensor may be combined to detect a touch of a detection target for a three-dimensional image. The photo sensor may be stacked on a display device and is configured to scan a movement of a detection target close to the touch screen. In more detail, the photo sensor mounts a photo diode and a transistor (TR) in a row/column and scans content disposed on the photo sensor by using an electrical signal changing according to an amount of light applied to the photo diode. That is, the photo sensor may calculate the coordinates of a detection target according to the amount of change in light and through this, may obtain the position information of the detection target.

The display unit 151 may display (output) information processed in the mobile terminal 100. For example, the display unit 151 may display execution screen information of an application program running on the mobile terminal 100 or user interface (UI) and graphic user interface (GUI) information according to such execution screen information.

Additionally, the display unit 151 may be configured as a three-dimensional display unit displaying a three-dimensional image.

A three-dimensional display method, for example, a stereoscopic method (a glasses method), an autostereoscopic (no glasses method), a projection method (a holographic method) may be applied to the three-dimensional display unit.

The sound output module 152 may output audio data received from the wireless communication unit 110 or stored in the memory 170 in a call signal reception or call mode, a recording mode, a voice recognition mode, or a broadcast reception mode. The sound output module 152 may output a sound signal relating to a function (for example, a call signal reception sound and a message reception sound) performed by the mobile terminal 100. The sound output unit 152 may include a receiver, a speaker, and a buzzer.

The haptic module 153 generates various haptic effects that a user can feel. A representative example of a haptic effect that the haptic module 153 generates is vibration. The intensity and pattern of vibration generated by the haptic module 153 may be controlled by a user's selection or a setting of a controller. For example, the haptic module 153 may synthesize and output different vibrations or output different vibrations sequentially.

The haptic module 153 may generate various haptic effects, for example, effects by a pin arrangement moving vertical to a contact skin surface, injection power or suction power of air through an injection port or a suction port, rubbing a skin surface, electrode contact, stimulus of electrostatic force and effects by the reproduction of cold/warm sense by using a device absorbing or emitting heat.

The haptic module 153 may be implemented to deliver a haptic effect through a direct contact and also allow a user to feel a haptic effect through a muscle sense such as a finger or an arm. The haptic module 153 may be more than two according to a configuration aspect of the mobile terminal 100.

The optical output module 154 outputs a signal for notifying event occurrence by using light of a light source of the mobile terminal 100. An example of an event occurring in the mobile terminal 100 includes message reception, call signal reception, missed calls, alarm, schedule notification, e-mail reception, and information reception through an application.

A signal outputted from the optical output module 154 is implemented as a mobile terminal emits single color of multi-color to the front or the back. The signal output may be terminated when a mobile terminal detects user's event confirmation.

The interface unit 160 may serve as a path to all external devices connected to the mobile terminal 100. The interface unit 160 may receive data from an external device, receive power and deliver it to each component in the mobile terminal 100, or transmit data in the mobile terminal 100 to an external device. For example, the interface unit 160 may include a wired/wireless headset port, an external charger port, a wired/wireless data port, a memory card port, a port connecting a device equipped with an identification module, an audio I/O port, a video I/O port, and an earphone port.

Moreover, the identification module, as a chip storing various information for authenticating usage authority of the mobile terminal 100, may include a user identity module (UIM), a subscriber identity module (SIM), and a universal subscriber identity module (USIM). A device equipped with an identification module (hereinafter referred to as an identification device) may be manufactured in a smart card form. Accordingly, the identification device may be connected to the terminal 100 through the interface unit 160.

Additionally, when the mobile terminal 100 is connected to an external cradle, the interface unit 160 may become a path through which power of the cradle is supplied to the mobile terminal 100 or a path through which various command signals inputted from the cradle are delivered to the mobile terminal 100 by a user. The various command signals or the power inputted from the cradle may operate as a signal for recognizing that the mobile terminal 100 is accurately mounted on the cradle.

The memory 170 may store a program for an operation of the controller 180 and may temporarily store input/output data (for example, a phone book, a message, a still image, and a video). The memory 170 may store data on various patterns of vibrations and sounds outputted during a touch input on the touch screen.

The memory 170 may include at least one type of storage medium among flash memory type, hard disk type, Solid State Disk (SSD) type, Silicon Disk Drive (SDD) type, multimedia card micro type, card type memory (for example, SD or XD memory type), random access memory (RAM) type, static random access memory (SRAM) type, read-only memory (ROM) type, electrically erasable programmable read-only memory (EEPROM) type, programmable read-only memory (PROM) type, magnetic memory type, magnetic disk type, and optical disk type. The mobile terminal 100 may operate in relation to a web storage performing a storage function of the memory 170 on internet.

Moreover, as mentioned above, the controller 180 may control operations relating to an application program and overall operations of the mobile terminal 100 in general. For example, if a state of the mobile terminal 100 satisfies set conditions, the controller 180 may execute or release a lock state limiting an output of a control command of a user for applications.

Additionally, the controller 180 may perform a control or processing relating to a voice call, data communication, and a video call may perform pattern recognition processing for recognizing handwriting input or drawing input on the touch screen as a text and an image, respectively. Furthermore, the controller 180 may use at least one or a combination of the above components to perform a control in order to implement various embodiments described below on the mobile terminal 100.

The power supply unit 190 may receive external power or internal power under a control of the controller 180 and may then supply power necessary for an operation of each component. The power supply unit 190 includes a battery. The battery is a rechargeable built-in battery and may be detachably coupled to a terminal body in order for charging.

Additionally, the power supply unit 190 may include a connection port and the connection port may be configured as one example of the interface unit 160 to which an external charger supplying power for charging of the battery is electrically connected.

As another example, the power supply unit 190 may be configured to charge a battery through a wireless method without using the connection port. In this case, the power supply unit 190 may receive power from an external wireless power transmission device through at least one of an inductive coupling method based on a magnetic induction phenomenon, and a magnetic resonance coupling method based on an electromagnetic resonance phenomenon.

Moreover, various embodiments below may be implemented in a computer or device similar thereto readable medium by using software, hardware, or a combination thereof.

Then, a communication system using the mobile terminal 100 is described according to an embodiment of the present disclosure.

First, the communication system may use different wireless interfaces and/or physical layers. For example, a wireless interface available to the communication system may include Frequency Division Multiple Access (FDMA), Time Division Multiple Access (TDMA), Code Division Multiple Access (CDMA), and Universal Mobile Telecommunications Systems (UMTS) (especially, Long Term Evolution (LTE), Long Term Evolution-Advanced (LTE-A), and Global System for Mobile Communications (GSM)).

Hereinafter, for convenience of description, description is made limited to CDMA. However, it is apparent that the present disclosure is applicable to all communication systems including Orthogonal Frequency Division Multiplexing (OFDM) wireless communication systems in addition to CDMA wireless communication systems.

The CDMA wireless communication system may include at least one terminal 100, at least one base station (BS) (it may be referred to as Node B or Evolved Node B), at least one base station controllers (BSCs), and a mobile switching center (MSC). MSC may be configured to be connected to Public Switched Telephone Network (PSTN) and BSCs. BSCs may be connected being paired with a BS through a backhaul line. The backhaul line may be provided according to at least one of E1/T1, ATM, IP, PPP, Frame Relay, HDSL, ADSL, and xDSL. Accordingly, a plurality of BSCs may be included in a CDMA wireless communication system.

Each of a plurality of BSs may include at least one sensor and each sensor may include an omni-directional antenna or an antenna indicating a specific radial direction from a BS. Additionally, each sensor may include at least two antennas in various forms. Each BS may be configured to support a plurality of frequency allocations and each of the plurality of frequency allocations may have a specific spectrum (for example, 1.25 MHz, 5 MHz, and so on).

The intersection of a sector and a frequency allocation may be referred to as a CDMA channel. A BS may be referred to as a Base Station Transceiver Subsystem (BTS). In such a case, one BSC and at least one BS together may be referred to as "BS". A BS may also represent "cell site". Additionally, each of a plurality of sectors for a specific BS may be referred to as a plurality of cell sites.

A Broadcasting Transmitter (BT) transmits broadcast signals to the terminals 100 operating in a system. The broadcast receiving module 111 shown in Fig. 1 is provided in the terminal 100 for receiving broadcast signals transmitted from the BT.

Additionally, GPS may be linked to a CDMA wireless communication system in order to check the location of the mobile terminal 100. Then, a satellite helps obtaining the location of the mobile terminal 100. Useful location information may be obtained by at least one satellite. Herein, the location of the mobile terminal 100 may be traced by using all techniques for tracing the location in addition to GPS tracking technique. Additionally, at least one GPS satellite may be responsible for satellite DMB transmission selectively or additionally.

The location information module 115 in a mobile terminal is for detecting and calculating the position of the mobile terminal and its representative example may include a GPS module and a WiFi module. If necessary, the location information module 115 may perform a function of another module in the wireless communication unit 110 in order to obtain data on the location of the mobile terminal alternatively or additionally.

The GPS module or location information module 115 may calculate information on a distance from at least three satellites and accurate time information and then apply triangulation to the calculated information, in order to accurately calculate the 3D current location information according to latitude, longitude, and altitude. A method for calculating location and time information by using three satellites and correcting errors of the calculated location and time information by using another one satellite is being widely used. Additionally, the GPS module 115 may speed information as continuously calculating the current location in real time. However, it is difficult to accurately measure the location of a mobile terminal by using a GPS module in a shadow area of a satellite signal such as a room. Accordingly, in order to compensate for the measurement of a GPS method, a WiFi Positioning System (WPS) may be utilized.

WPS is a technique for tracking the location of the mobile terminal 100 by using a WiFi module in the mobile terminal 100 and a wireless Access Point (AP) for transmitting or receiving wireless signals to or from the WiFi module and may mean a Wireless Local Area Network (WLAN) based location measurement technique using WiFi.

A WiFi location tracking system may include a WiFi location measurement server, a mobile terminal 100, a wireless AP connected to the mobile terminal 100, and a database for storing arbitrary wireless AP information.

The mobile terminal 100 in access to a wireless AP may transmit a location information request message to a WiFi location measurement server.

The WiFi location measurement server extracts information of a wireless AP connected to the mobile terminal 100 on the basis of a location information request message (or signal) of the mobile terminal 100. Information of a wireless AP connected to the mobile terminal 100 may be transmitted to the WiFi location measurement server through the mobile terminal 100 or may be transmitted from a wireless AP to a WiFi location measurement server.

Based on the location information request message of the mobile terminal 100, the extracted information of a wireless AP may be at least one of MAC Address, Service Set Identification (SSID), Received Signal Strength Indicator (RSSI), Reference Signal Received Power (RSRP), Reference Signal Received Quality (RSRQ), channel information, Privacy, Network Type, Signal Strength, and Noise Strength.

As mentioned above, the WiFi position measurement server may extract wireless AP information corresponding to a wireless AP that the mobile terminal 100 access from a preestablished database by using information of the wireless AP connected to the mobile terminal 100. At this point, information of arbitrary wireless APs stored in the database may information such as MAC Address, SSID, channel information, Privacy, Network Type, latitude and longitude coordinates of a wireless AP, a building name where a wireless AP is located, the number of floors, indoor detailed location (GPS coordinates available), the address of the owner of an AP, and phone numbers. At this point, in order to remove a mobile AP or a wireless AP provided using illegal MAC address during a measurement process, a WiFi location measurement server may extract only a predetermined number of wireless AP information in high RSSI order.

Then, the WiFi location measurement server may extract (or analyze) the location information of the mobile terminal 100 by using at least one wireless AP information extracted from the database. By comparing the included information and the received wireless AP information, location information of the mobile terminal 100 is extracted (or analyzed).

As a method of extracting (or analyzing) the location information of the motile terminal 100, a Cell-ID method, a finger-print method, a triangulation method, and a landmark method may be used.

The Cell-ID method is a method for determining the location of a wireless AP having the strongest signal intensity in neighbor wireless AP information that a mobile terminal collects as the location of the mobile terminal. Implementation is simple, no additional cost is required, and location information is obtained quickly but when the installation density of wireless APs is low, measurement precision is poor.

The finger-print method is a method for collecting signal intensity information by selecting a reference location from a service area and estimating the location through signal intensity information transmitted from a mobile terminal on the basis of the collected information. In order to use the finger-print method, there is a need to provide a database for storing propagation characteristics in advance.

The triangulation method is a method for calculating the location of a mobile terminal on the basis of a distance between coordinates of at least three wireless APs and a mobile terminal. In order to measure a distance between a mobile terminal and a wireless AP, a signal intensity converted into distance information, Time of Arrival (ToA), Time Difference of Arrival (TDoA), and Angle of Arrival (AoA) may be used.

The landmark method is a method for measuring the location of a mobile terminal by using a landmark transmitter knowing the location.

In addition to the listed methods, a variety of algorithms may be utilized as methods for extracting (or analyzing) the location information of a mobile terminal.

As the extracted location information of the mobile terminal 100 is transmitted to the mobile terminal 100 through the WiFi location measurement server, the mobile terminal 100 may obtain the location information.

As connected to at least one wireless AP, the mobile terminal 100 may obtain location information. At this point, the number of wireless APs, which are required for obtaining the location information of the mobile terminal 100, may vary according to a wireless communication environment where the mobile terminal 100 is located.

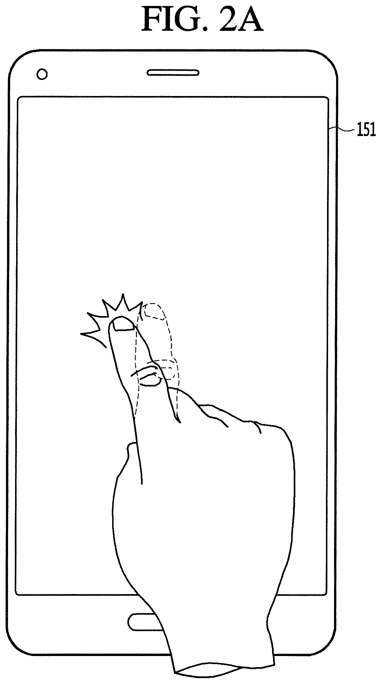

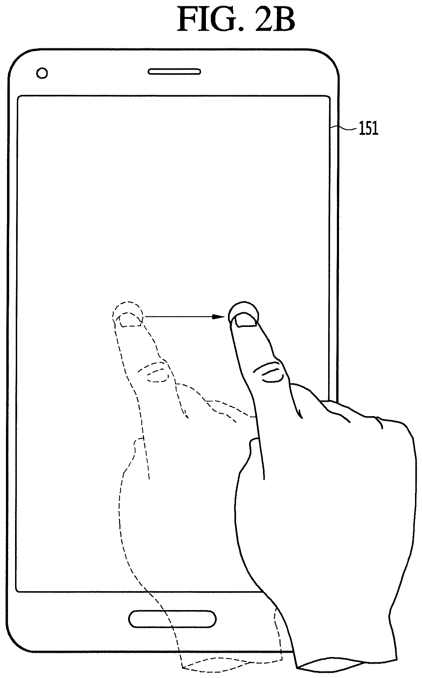

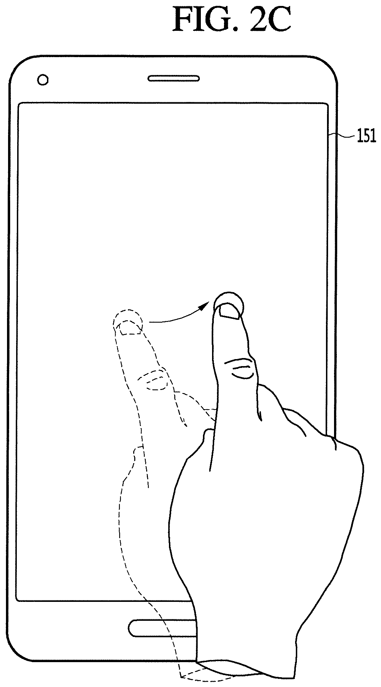

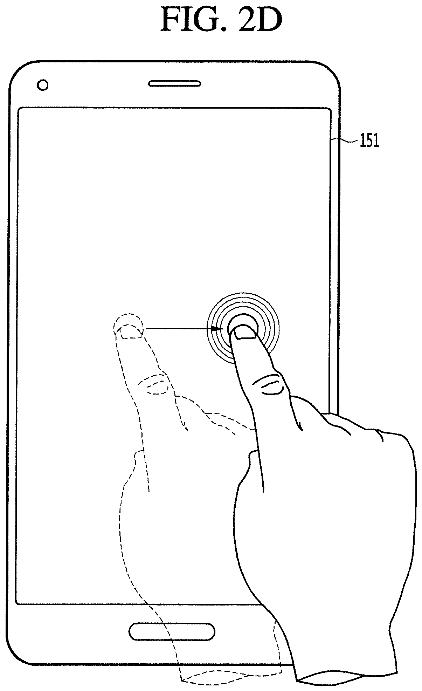

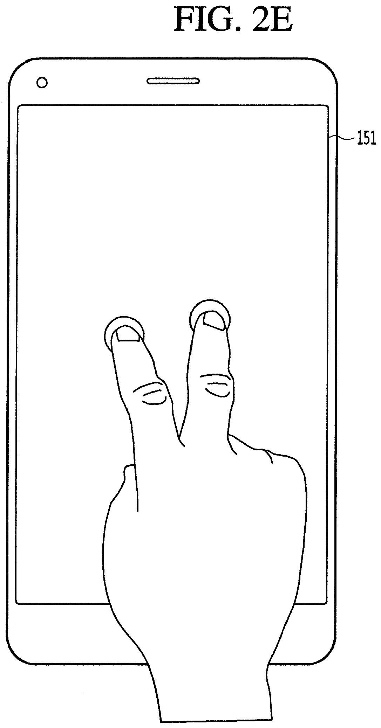

FIGs 2a, 2b, 2c, 2d, and 2e illustrate touch gestures according to one embodiment of the present disclosure.

In a more specific example, the touch gesture may be applied in a variety of ways on a single contact point on the touch-screen. In one example, as shown in FIG. 2a, the touch gesture may be a tab gesture in which the user touches the touch screen with the finger or stylus for a short time, such as a single mouse click. In one example, as shown in FIG. 2b, the touch gesture may be a drag gesture in which a contact starting at a first point on the touch-screen may be maintained continually along one direction on the touch-screen, and then the contact is terminated at an ending point other than the first point. In one example, as in FIG. 2c, the touch gesture may be a flicking gesture in which the user takes the drag gesture for a short time with the finger or stylus and then remove the finger or stylus from the touch-screen. In one example, the touch gesture may be a swipe gesture in which the user uses the finger or stylus on the touch-screen to conduct the drag gesture in a more pressurized manner. In one example, as shown in FIG. 2d, the touch gesture may be a touch and hold gesture in which the user maintains a contact state between the finger or stylus and the touch-screen over a predetermined time duration. In one example, the touch gesture may be a double tap gesture with two consecutive tap gestures on a single contact point on the touch-screen.

Further, the touch gesture may be applied in a variety of ways on at least two contact points on the touch-screen. In one example, the touch gesture may be a pinch-out gesture in which the user extends a distance between two fingers from a state where the two fingers respectively touches the two points spaced from each other on the touch-screen. In one example, the touch gesture may be a pinch-in gesture in which the user reduces a distance between two fingers from a state where the two fingers respectively touches the two points spaced from each other on the touch-screen. In one example, as shown in FIG. 2e, the touch gesture may be a multi-touch gesture in which the user touches at least two fingers onto at least two contact points respectively on the touch-screen at substantially the same time point.

Alternatively, the user gesture may be a motion gesture sensed through a sensor on the terminal.

In one example, the user gesture may be a motion gesture in which the user tilts the terminal body in a specific direction or moves the terminal body in a specific direction within a predetermined distance. In one example, the user gesture may be a movement gesture in which the user moves the terminal body toward a specific part of the body, for example, toward the ear and moves back the terminal body to a position at which the user views the display unit of the terminal. In one example, when the mobile terminal has a cover covering at least a portion of the front of the terminal body, the user gesture may be a motion gesture in which the user changes the open/close state between the terminal body and the cover.

Thus, the user gesture may be defined in various ways. Hereinafter, an embodiment in which various functions related to voice are conducted when the user gesture is the touch gesture.

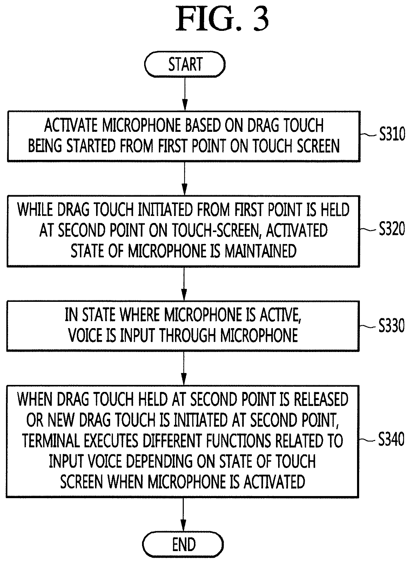

FIG. 3 is a flow chart of a control method of the mobile terminal related to the present disclosure.

First, referring to FIG. 3, the mobile terminal according to the present disclosure may activate the microphone based on the drag touch being started from a first point on the touch screen (S310).

In this connection, the microphone 122 is configured to receive a voice. when the microphone 122 is activated, a voice recognition function according to the present disclosure is activated.

Further, in this connection, the first point may be variously defined according to the state of the touch-screen 151. More specifically, the first point may be defined as various locations on the touch-screen 151, depending on whether an illumination of the touch-screen 151 is in an inactive or active state or depending on whether specific screen information is output on the touch-screen 151.

For example, When the illumination of the touch-screen 151 is in a disabled state, the first point may be defined as any point on the touch-screen 151. In another example, when a home screen page containing an icon of an application is displayed on the touch-screen 151, the first point may be defined as any point in a region where the application icon is not displayed on the home screen page. In another example, when an execution screen of a specific application is output on the touch screen 151, the first point may be defined as a point in a state bar that indicates a state of the terminal. However, the present disclosure is not limited thereto. When the home screen page is displayed on the touch-screen 151, the first point may be defined as one point in the state bar.

Thus, when the drag touch initiated from the first point is held at a second point on the touch-screen, the activated state of the microphone may be maintained while the drag touch is held at the second point (S320).

In this connection, the second point is one point on the touch-screen 151, and may be defined as a point that is the same as or different from the first point. Further, the second point may be variously defined according to the state of the touch-screen 151. For example, when the home screen page is displayed on the touch screen 151, the second point may be defined as a point in a region where the application icon is displayed on the home screen page. In another example, when the touch screen 151 has a state in which the execution screen of a specific application is output the screen 151, the second point may be set to any point closer to the bottom of the touch-screen 151 than the first point is.

Further, while the drag touch is held at the second point, the activated state of the microphone is maintained. In the state where the microphone is active, the voice may be input through the microphone at S330.

As such, the voice input while the microphone 122 is activated may be recognized as a voice input according to the voice recognition function in accordance with the present disclosure. Further, the controller 180 may temporarily store voice data corresponding to the voice input through the microphone 122 in the memory 170 while the microphone 122 maintains the active state thereof.

Then, when the drag touch held at the second point is released or a new drag touch is initiated at the second point, the terminal may execute different functions related to the input voice depending on the state of the touch screen when the microphone is activated (S340).

That is, the controller 180 stores the voice as voice data in the memory 170, or executes a corresponding function to a voice command corresponding to at least a portion of the voice, according to a subsequent user gesture of a transverse movement from a state of the drag touch held at the second point.

For example, when the drag touch held at the second point is released, the controller 180 may store the voice data corresponding to the voice input in the active state of the microphone in the memory 170. Further, the controller 180 may execute a function corresponding to the voice command according to the input voice based on detection of a new drag touch starting from the second point. For example, the controller 180 may execute a call origination function using an input voice or to execute a search function using at least a portion of the input voice. Further, in this case, the controller 180 may use information contained in the at least a portion of the voice for execution of the function corresponding to the voice command.

Further, in this connection, the functions executed in relation to the input voice may be set differently depending on the state of the touch screen 151 when the microphone 122 is activated. That is, even when subsequent user gestures are the same at a state of the drag touch held at the second point, the functions to be executed in relation to the input voice differs from each other based on the state of the touch-screen 151 at the time when the microphone 122 is activated.

For example, when the microphone 122 is activated in the illumination-disabled state of the touch-screen 151, and when the touch held at the second point is released, the controller 189 may store the voice data corresponding to the input voice in the memory 170. However, when the home screen page is output on the touch-screen 151 and the microphone 122 is activated, and when the drag touch held at the second point is released, the controller 180 may restrict the execution of functions related to the input voice. As described above, an embodiment in which the functions to be executed in response to the user gesture subsequently conducted from the second point vary according to the state of the touch-screen 151 will be described later with reference to the accompanying drawings.

Further, in FIG. 3, an description has been given of an embodiment in which the activated state of the microphone 122 is determined based on a drag input and then a hold, and, then, a subsequent user gesture is a drag input. However, various kinds of touch gestures as described in conjunction with FIG. 2a, FIG. 2b, FIG. 2c, FIG. 2d, and FIG. 2e may be applied to input gestures that are used to determine whether the microphone 122 is active and whether the voice-related command is executed.

Thus, the mobile terminal according to the present disclosure may execute various functions related to the voice in response to the user gesture applied to the terminal after the user inputs the voice. Further, the function executed in relation to the voice may vary depending on the state of the touch screen at the time the microphone is activated. Therefore, the user may execute various functions related to the voice simply by inputting the voice and then changing the user gesture. Further, even when the user conducts the same user gesture, the user may have the opportunity to execute the appropriate function according to the state of the touch-screen in relation to the inputted voice.

Hereinafter, an embodiment in which a voice is input in a state where the illumination of the touch screen is inactivated will be described.

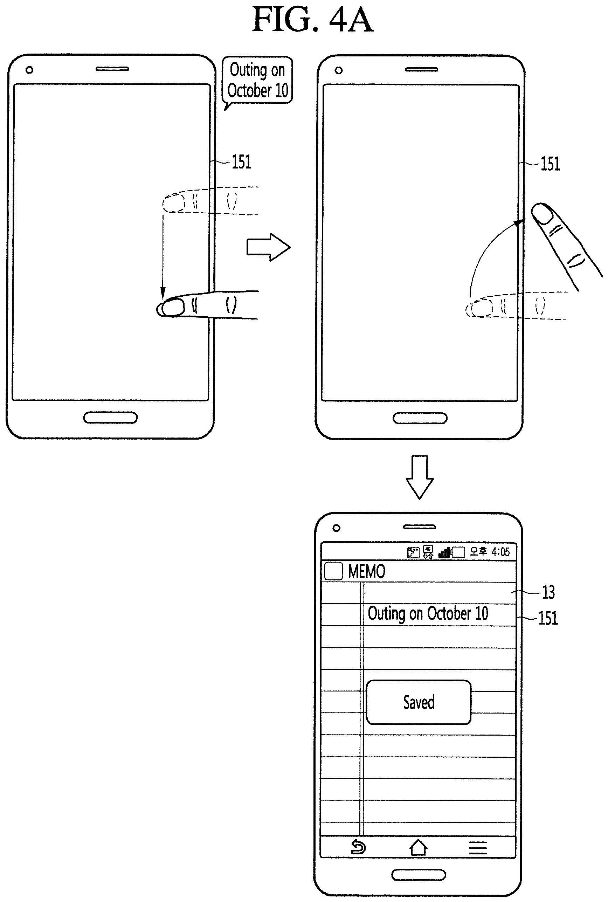

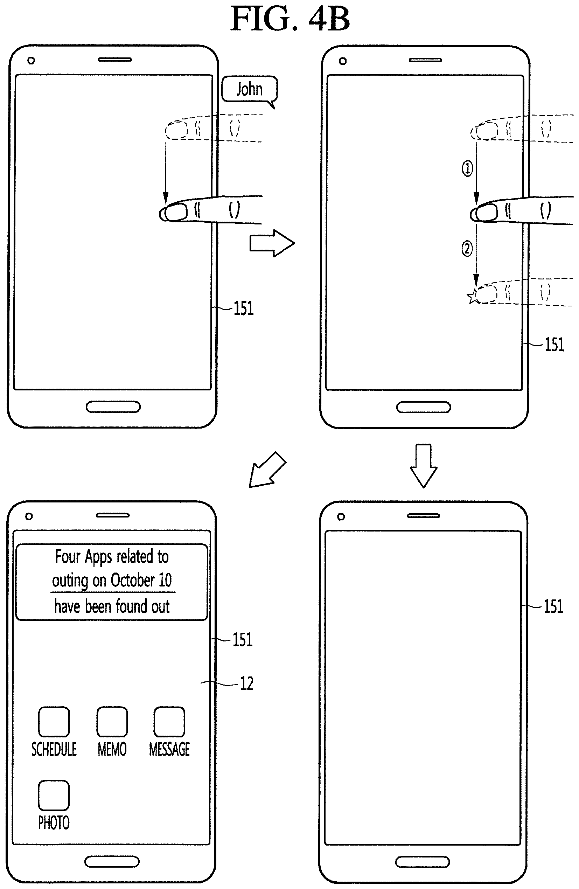

FIG. 4a and FIG. 4b show an embodiment that when the microphone is activated in the state where illumination of the touch-screen is inactive, voice-related functions are executed in response to a subsequent user gesture.

First, as shown in a first drawing in FIG. 4a, in the illumination-disabled state of illumination of the touch-screen 151, a drag touch starting at the first point, which is an arbitrary point on the touch-screen 151, may be applied thereto. In this connection, a touch sensor provided in the touch-screen 151 may sense a touch in a state in which illumination of the touch-screen 151 is inactivated. Thus, the controller 180 may activate the microphone 122 based on the detection of the drag touch input initiated at the first point by the touch sensor. Further, the controller 180 may maintain the microphone 122 in the active state while the drag touch initiated at the first point is held at a second point, which is an arbitrary point on the touch-screen 151.

Thus, in the state where the microphone 122 is active, voice may be input to the terminal through the microphone 122. Further, as shown in a second drawing in FIG. 4a, the drag touch held at the second point may be released. In this case, the controller 180 may store, in the memory 170, voice data corresponding to the voice ("outing on Oct. 10, 2006") entered in the microphone-activated state. Further, the controller 180 may switch the illumination of the touch-screen 151 to the active state while storing the input voice in the memory 170. Further, the controller 180 may control the touch-screen 151 to display notification information indicating the storage of the voice on the touch-screen 151 while the illumination is enabled.

In this connection, the controller 180 may output the execution screen 13 of the application related to storing the voice on the touch-screen 151, as shown in a third drawing in FIG. 4a. The notification information informing the storage of the voice may be displayed in a form of a pop-up window on a screen displayed on the touch-screen 151 when the illumination of the touch-screen 151 is activated.

Further, the voice may be stored in the memory 170 in various formats, such as a voice note corresponding to the voice, text corresponding to the voice, etc.

In one example, as shown in FIG. 4b, in the state where illumination of the touch-screen 151 is inactive, the drag touch held at the second point may proceed to a third point different from the second point. For example, the third point may be a point located in a path of a direction (first direction) in which the held drag touch returns from the second point to the first point. Further, the third point may be a point located in a path of a direction (second direction) from the first point to the second point so that the held drag touch may proceed in the direction (second direction) from the first point to the second point.

When, as in a second drawing in FIG. 4b, the drag touch held at the second point advances from the second point in the first direction, the controller 180 may restrict the execution of functions associated with the input voice. In this case, the controller 180 may cause the illumination of the touch-screen 151 to remain in an inactive state even when the drag touch progressed from the second point in the first direction is released at the third point.

To the contrary, when the drag touch held at the second point advances from the second point in the second direction, as in a second drawing in FIG. 4b, the controller 180 may execute a function corresponding to a voice command in response to a reception of the voice.

In this connection, the controller 180 may execute the search function corresponding to the voice command according to the voice "outing on October 10". Further, the controller 180 may execute the search function using the information contained in the at least a portion of the voice. Further, when the held drag touch is released at the third point, the controller 180 may switch the illumination of the touch-screen 151 to the active state. Further, the touch-screen 151 may be controlled by the controller such that an execution screen 12 according to the search function execution is output on the touch-screen 151.

In one example, although not shown in the drawing, a function corresponding to a voice command according to the voice may include various functions such as a call origination function and a music play function in addition to the search function. Further, a function to be executed based on the voice command related to the voice is set to a plurality of functions, the controller 180 may divide the touch-screen 151 so that all of the screens corresponding to the multiple functions are allocated on the touch-screen 151.

Accordingly, the user inputs a voice through the microphone activated in the illumination-disabled state of the touch-screen 151, and then changes the touch gesture applied to the touch-screen 151, thereby to execute various functions related to the voice. Further, when the touch gesture is a drag touch, the user may execute the desired function by changing the direction of the drag touch or may cancel an unintended input voice by changing the direction of the drag touch. Further, even when the illumination of the touch screen 151 is in the deactivated state, the user may use a voice recognition function. When the corresponding function corresponding to the input voice and user gesture is executed, the touch screen 151 is switched to the active state. Therefore, unnecessary power consumption can be prevented.

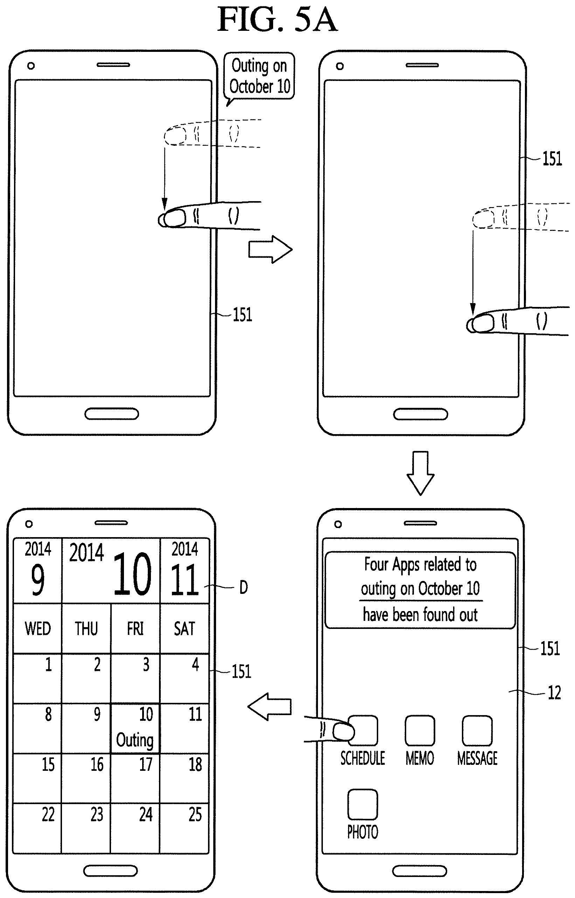

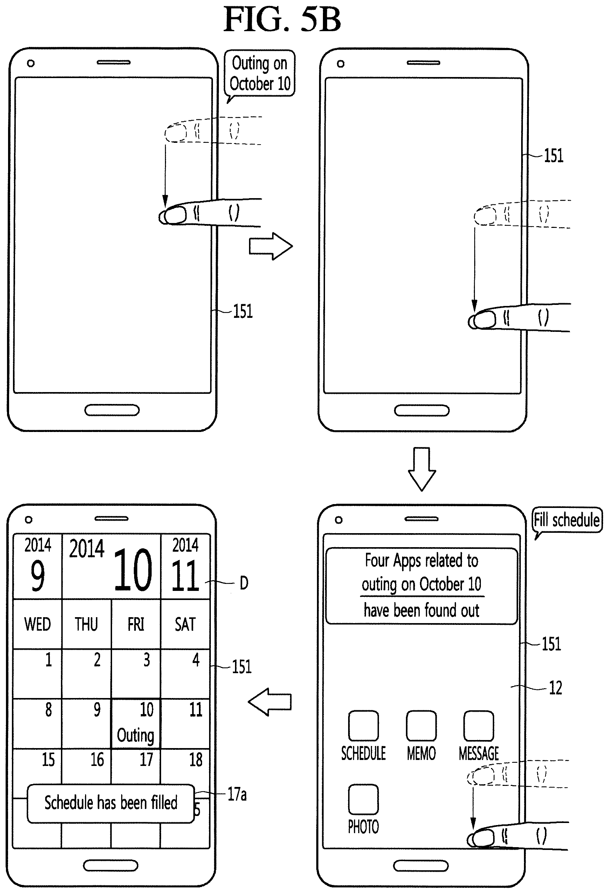

In one example, when the function corresponding to the voice command is executed, the touch screen 151 may display an execution screen according to the function execution. In this connection, the user may use the execution screen by applying an additional touch to the execution screen. In this regard, the description thereof will be made with reference to FIG. 5a and FIG. 5b.

FIG. 5a and FIG. 5b show an example of function execution according to the touch applied after the execution screen of the function corresponding to the voice command is outputted.

First, referring to FIG. 5a, in the state where illumination of the touch-screen 151 is inactive, the microphone 122 may be activated by a drag touch starting at an arbitrary first point on the touch-screen 151. In this case, although not shown in the drawing, the controller 180 may perform a separate notification so that the user may recognize that the microphone 122 is activated. For example, the controller 180 may vibrate the terminal via a haptic module 154 in response to activation of the microphone 122, or may output a voice to inform the activation of the voice recognition function via the speaker.

Thus, the active state of the microphone 122 may be maintained while the drag touch initiated at the first point is held at the second point. Further, as shown in a second drawing in FIG. 5a, when the held drag touch moves from the second point to the third point, the search function may be executed according to the voice command corresponding to the voice ("outing on October 10"). In this case, the controller 180 may output the execution screen 12 according to the search function execution on the touch-screen 151. In this connection, when the user releases the drag touch at the third point, the controller 180 may switch the microphone 122 to an inactive state. Further, when an additional touch is applied from the user to the execution screen 12, the functions associated with the execution screen 12 and corresponding to the touch may be performed.

That is, as shown in a third drawing in FIG. 5a, when the touch is applied to an icon of a schedule related application on the execution screen 12 on which the search function is performed, as in a fourth drawing in FIG. 5a, the execution screen 17 of the application corresponding to the icon may be displayed on the touch-screen 151.

In one example, the drag touch held at the second point may advance to the third point, and the drag touch may be held again at the third point. In this case, the controller 180 may continue to maintain the microphone 122 in the active state while the drag touch held at the second point proceeds. Further, while the drag touch is held again at the third point, the controller 180 may continue to maintain the microphone 122 in the active state.

In this case, as shown in FIG. 5b, when a new voice is input through the microphone while the drag touch is held again at the third point, the controller 180 may change the execution screen 12 according to a voice command corresponding to the newly input voice. That is, as shown in a fourth drawing in FIG. 5b, when the newly input voice ("fill schedule") is an new voice command, the terminal may execute a function (function to fill schedule) corresponding to the new voice command in the execution screen 12.

Thus, while the drag touch is held at one point on the touch-screen 151, the controller 180 may continue to maintain the microphone 122 in the active state. Therefore, even after the user executes the function using the voice, the user may continuously hold the drag touch at the one point and input the voice again to conveniently execute the desired function continuously.

First, a mobile terminal with a user interface using drag according to one aspect of the present disclosure will be described.

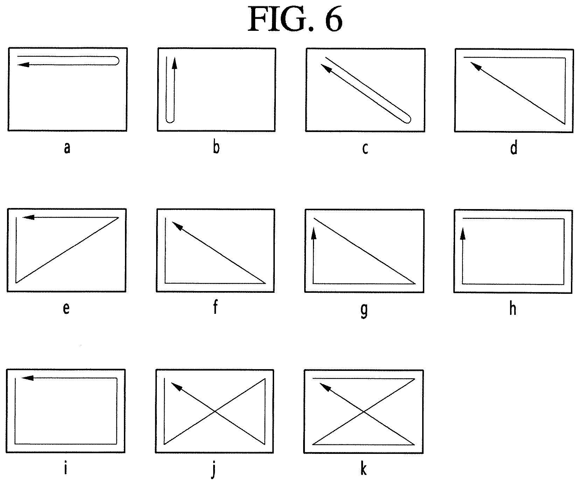

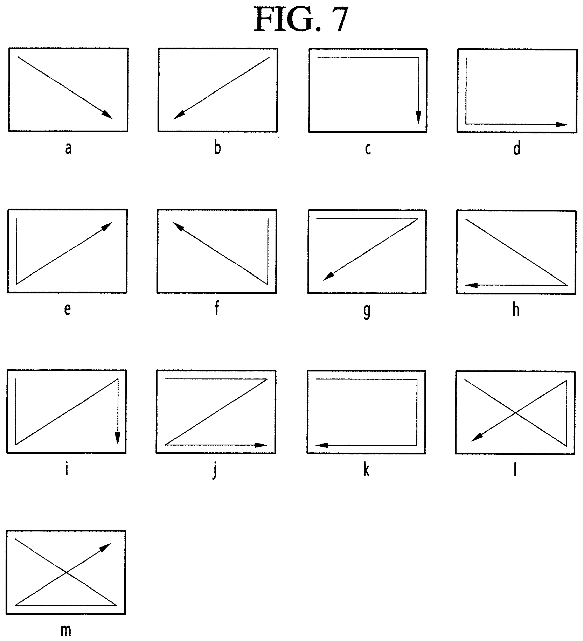

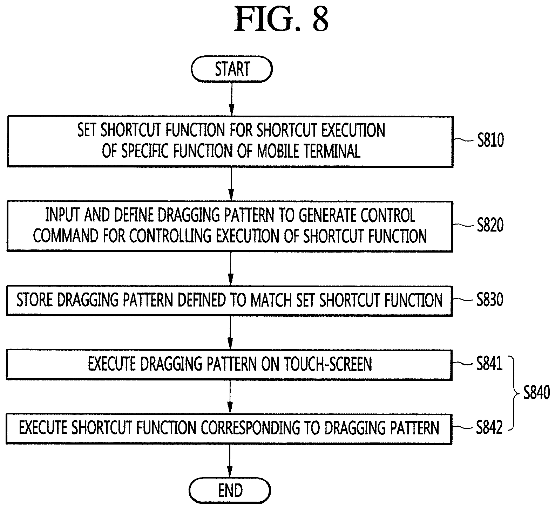

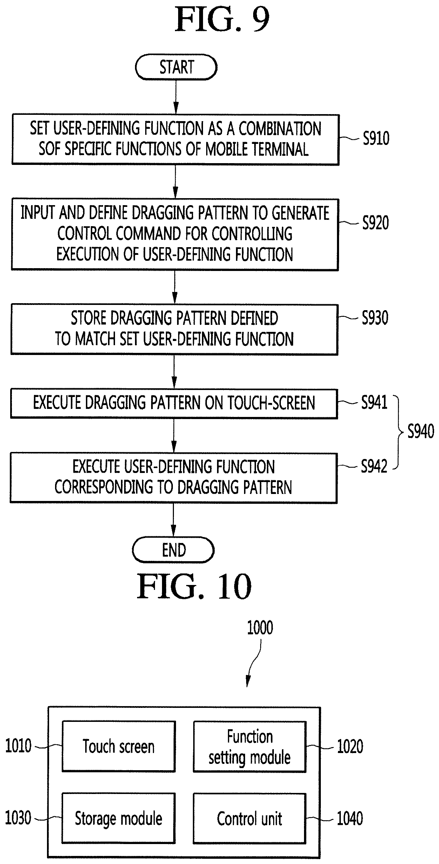

FIG. 6 and FIG. 7 show drag traces in a user interface implementation using a drag according to an embodiment of the present disclosure. FIG. 8 and FIG. 9 are flow diagrams of a user interface implementation method using drag on a mobile terminal in accordance with an embodiment of the present disclosure. FIG. 10 is a block diagram illustrating a mobile terminal with a user interface using drag on the mobile terminal according to another embodiment of the present disclosure.

Referring to FIG. 10, a mobile terminal 1000 having a user interface using drag is configured to include a touch screen 1010, a function setting module 1020, a storage module 1030, and a controller 1040. As used herein, the mobile terminal 1000 refers to a portable or mobile information terminal device, for example, a mobile communication terminal such as a mobile phone, a PDA, a PMP, and navigation device. etc. The mobile terminal 1000 according to the present disclosure should have a touch-screen 1010.

A set function is input to the touch-screen 1010 via dragging operation. As used herein, the dragging means performing a drag operation on the touch screen 1010, such that a drag trace is drawn. Preferably, the dragging may be configured such that at least one of the four corners of the touch-screen 1010 is set as a start point and an end point, and at least one of remaining corners is set as an intermediate point, as shown in FIG. 6. Further, preferably, the dragging may be configured such that one of the four corners of the touch-screen 1010 is a start point and one of the remaining points is an end point, for example, as shown in FIG. 7. Each of the drag traces shown in FIG. 6 and FIG. 7 represents one embodiment. The dragging configuration according to the present disclosure is not limited thereto.

The function setting module 1020 may be configured to set a shortcut function for shortcut execution of a specific function of the mobile terminal 1000 according to dragging input on the touch screen 1010 or to set a shortcut function for controlling the execution of a user-defining function as a combination of specific functions or to set the user-defining function. When the user want to find out a specific number of a person on a mobile phone and call the person, examples of the shortcut function for shortcut execution of a specific function may include one-stop call shortcut function to allow performing the executions of number search, name-based number search, number selection, and phone call connection thereto via one shortcut function button push. When the user is to find out an optimal route to a specific destination, for example, to an optimal route to a home in a navigation system, examples of the shortcut function for shortcut execution of a specific function may include one-stop navigation shortcut function to allow performing the executions of route-finding setting, destination input, destination selection, optimal route finding, etc. via one shortcut function button push. When the user wants to watch DMB or moving picture on the mobile terminal, the user may execute a shortcut function to watch the target program in place of multiple manipulations on the screen. The shortcut function means that the number of selection steps to implement a specific function is reduced or the specific function is executed via one-stop shortcut function key.

Further, the user-defining function refers to a function that is individually defined by the user so that existing functions included in the mobile terminal are combined into a single function. For example, in the case of a mobile phone, a telephone calling function and a message writing function may be combined into a single function such that the message creation window is displayed immediately when the call is not connected to a called number and then the call connection attempt stops. Thus, the user may input a message into the window. Alternatively, the user-defining function may be configured such that when the user receives the call and then stop the connection, a telephone number corresponding to the received call may be stored directly into the mobile phone of the user, which may otherwise require separate function executions. Alternatively, in the case of the navigation, a user-defining function may be configured such that all of the fast, optimal, and dedicate paths are displayed on the screen. In this case, the terminal may use the screen division function such as PIP scheme. PIP (Picture In Picture) or screen division scheme may be obvious to a person having ordinary skill in the navigation related field. Thus, a detailed description will be omitted.

The storage module 1030 stores dragging configuration to match the shortcut function or the user-defining function set by the function setting module 1020.

The controller 1040 executes the shortcut function or the user-defining function that matches the specified dragging input according to the specific dragging input on the touch-screen 1010.

Next, the method for implementing the user interface using drag in accordance with one aspect of the present disclosure will be described.

As shown in FIG. 8 and FIG. 9, an example of a method of implementing a user interface using drag according to an embodiment of the present disclosure is as follows. The user interface implementation method using drag in the mobile terminal 1000 having the touch screen 1010 includes the following operations S810 to S840 and S910 to S940.

First, as shown in FIG. 8 and FIG. 9, the method sets a shortcut function for shortcut execution of a specific function of the mobile terminal, or a user-defining function as a combination of specific functions at S810 and S910. As used herein, the shortcut function or user-defining function is the same as described above.

As shown in FIG. 8 and FIG. 9, the dragging to generate the control command for controlling the execution of the shortcut function or the user-defining function is input and defined on the touch-screen 1010 at S820 and S920.

The dragging to generate the control command, that is, an operation to input a drag trace may be executed after setting the shortcut function or a user-defining function. Alternatively, unlike Figures 8 and 9, the dragging may be first executed and then a shortcut function or a user-defining function corresponding to the dragging pattern may be set. Such variations are to be understood as modifications that may occur obviously to those skilled in the art without departing from the scope of the present disclosure.

Then, the operations S830 and S930 will store the dragging pattern defined to match the set shortcut function or user-defining function.

Although not shown in the storage operations S830 and S930, an icon corresponding to the dragging pattern that matches the set shortcut function or user-defining function may be created and the generated icon may be stored and displayed on the touch-screen 1010.

Further, in the operations S840 and S940, the dragging defined on the touch-screen 1010 is executed S841 and S941 such that the set shortcut function or user-defining function is performed S842 and S942. A shortcut function or a user-defining function according to the newly defined dragging is performed, so that the user interface may be extended for the convenience of the user.

FIG. 6 and FIG. 7 show drag traces on the touch-screen in a user interface implementation using drag according to an embodiment of the present disclosure.

As shown in FIG. 6, the dragging pattern, or drag trace, to generate the control command has at least one of the four corners of the touch-screen 1010 as the start point and the end point thereof, and has at least one of the remaining corners as the intermediate point thereof. The drag traces as shown in FIG. 6 represent merely examples to illustrate the present disclosure. The present disclosure may be modified in various ways other than the embodiment shown in FIG. 6. Specifically, as shown in a to c FIG. 6, a start point and an end point occurs at one corner of the four corners, and the trace passes through only one of the remaining corners. Alternatively, as shown in d to g in FIG. 6, the trace passes through only two of the remaining corners. Alternatively, as shown in h to k in FIG. 6, the trace passes through three of the remaining corners. An dimension of each of a start point, an end point, or an intermediate point at each corner is recognized to have a predetermined size, for example, an area, preferably a predetermined ratio of the area of each point to the entire area of the touch screen.

Alternatively, the dragging pattern to generate the control command, as shown in FIG. 7, may have one of the four corners of the touch-screen 1010 as a start point and have one of the remaining corners as an end point. Specifically, as shown in a and b in FIG. 7, only the two of the four corners are the start point and the end point, respectively without a corner as the intermediate point. Alternatively, one of the corners may be an intermediate point as shown in c to h in FIG. 7. Alternatively, two of the four corners may be intermediate points, as shown in i to m in FIG. 7.

Configuring the start point and end point or the start point, end point, and intermediate point of the drag trace to occur at more than two corners of the four corners may allow the beginning and end points of the drag trace to be more clearly noticed, for example, as shown in FIG. 6 and FIG. 7. Thus, the implementation of the interface using the dragging may be done more accurately. That is, defining the corners of the four corners as the start point and end point of the drag trace may allow the user to input more precisely the drag pattern than when the user sets a specific function input via symbols or characters on the touch screen 1010. Thus, the user may recognize the input accurately. Thus, this may extend the user interface and improve the convenience.

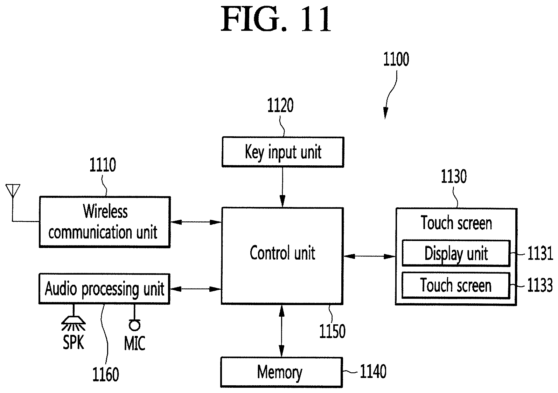

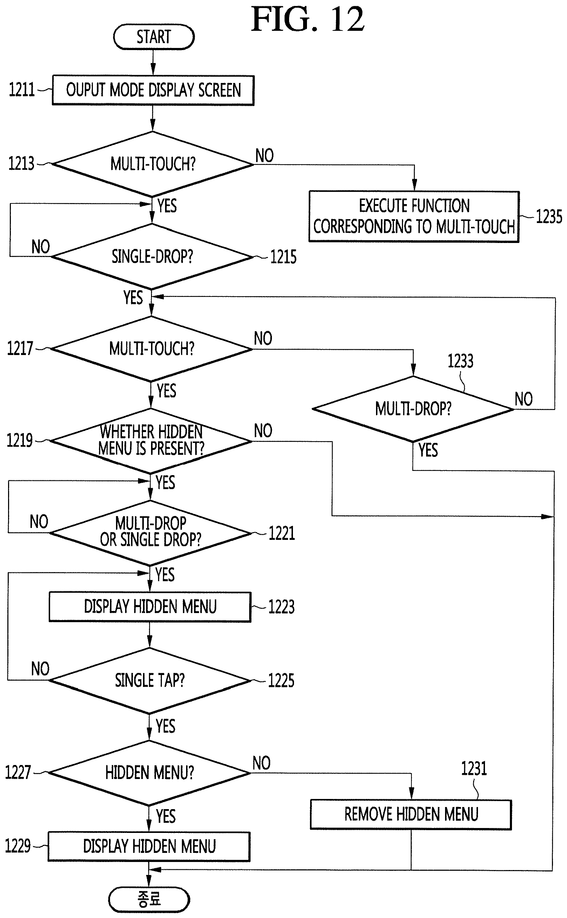

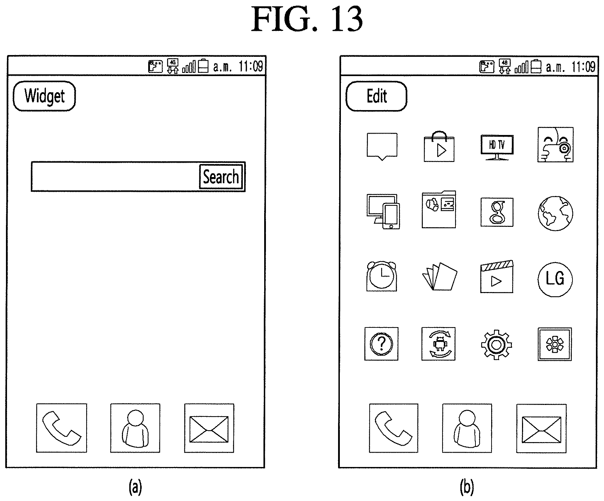

FIG. 11 is a block diagram illustrating a configuration of a mobile terminal according to another embodiment of the present disclosure. FIG. 12 is a flowchart showing a menu display procedure on a mobile terminal according to an embodiment of the present disclosure. FIG. 13 to FIG. 17 are example views showing screens displayed when a menu display procedure is conducted on a mobile terminal according to an embodiment of the present disclosure.

Referring to FIG. 11, the mobile terminal 1100 of the present embodiment includes a wireless communication unit 1110, a key input unit 1120, a touch screen 1130, a memory 1140, a controller 1150, and an audio processing unit 1160.

The wireless communication unit 1110 performs a wireless communication function of the mobile terminal 1100. The wireless communication unit 1110 includes an RF transmitter for up-converting and amplifying a frequency of a transmitted signal, and an RF receiver for noise-amplifying a received signal and down-converting the frequency of the received signal.

The key input unit 1120 includes function keys for setting and executing various functions.

The touch screen 1130 includes a display unit 1131 and a touch panel 1133. The display unit 1131 displays the state of the mobile terminal 1100. In this case, the display unit 1131 is implemented as an LCD, and includes an LCD controller, a memory capable of storing display data, and an LCD display element. Furthermore, the touch panel 1133 senses a touch on the display unit 1131. The touch panel 1133 is mounted on the display unit 1131 and includes a touch detection unit (not shown) and a signal conversion unit (not shown). The touch detection unit senses the change of physical quantities such as resistance, capacitance, etc. to detect the occurrence of touch. Further, the signal conversion unit converts the change in the physical quantity into a touch signal.

The memory 1140 may include program memory and data memory. The program memory stores programs for controlling the general operation of the mobile terminal 1100. Furthermore, the program memory may store programs for displaying menus according to an embodiment of the present disclosure. The data memory performs a function to store the data generated during the execution of the programs. In this connection, the memory 1140 may map at least one hidden menu to each mode display screen and store the mapping according to an embodiment of the present disclosure. In this connection, the memory 1140 may map at least one hidden menu to each location in the specific mode display screen and store the mapping according to an embodiment of the present disclosure.

The controller 1150 performs a function for controlling the overall operation of the mobile terminal 1100. The controller 1150 includes a data processing unit having a transmitter for encoding and modulating a transmitted signal, a receiver for demodulating and decoding the received signal, and the like. In this connection, the data processing unit may be composed of a modem and a codec. Further, the codec includes a data codec for processing packet data and an audio codec for processing audio signals such as voice. Further, the controller 1150 may receive a touch signal from a signal conversion unit and detect touch, drop, tap, etc. occurring on the touch panel 1133.

In this connection, the controller 1150 controls the display unit 1131 to display the mode display screen according to the driving mode. Furthermore, when the touch panel 1133 senses a multi-touch on at least two positions and then detects a single-drop and a single touch on one of the positions corresponding to the multi-touches, the controller 150 determines a hidden menu corresponding to another of the positions corresponding to the multi-touches in the mode display screen according to an embodiment of the present disclosure. When a multi-drop is detected at positions corresponding to multi-touches on the touch panel 1133, the controller 1150 controls the display unit 1131 to display the hidden menu on the mode display screen according to an embodiment of the present disclosure. In this connection, the controller 1150 may control the display unit 1131 to display the hidden menu in a drop-down manner or in a pop-up manner in some regions of the mode display screen. In addition, upon detecting a single tap corresponding to the hidden menu on the touch panel 1133, the controller 1150 executes the hidden menu according to an embodiment of the present disclosure.

The audio processing unit 1160 reproduces the received audio signal output from the audio codec of the data processing unit through the speaker SPK, or performs the function of transmitting the audio signal generated from the microphone MIC to the audio codec of the data processing unit.

In this connection, in FIGS. 13 to 17, (a) denotes a case where an operation mode is the idle mode, and (b) denotes the case where the operation mode is the menu display mode.

Referring to FIG. 12, the menu display procedure of the mobile terminal 1100 of this embodiment starts when the controller 1150 controls the display unit 1131 to display a mode display screen in an 1211 operation. In this connection, the controller 1150 controls the display unit to display the mode display screen according to the operation mode as shown in FIG. 13. That is, the controller 1150 may control the display unit to display an idle screen as shown in (a) FIG. 13. In this connection, the controller 1150 may control the display unit to display a preset background image. In addition, the controller 1150 may further control the display unit to display an menu executable in the idle mode as an icon on the background image. Alternatively, the controller 1150 may control the display unit to display a menu display screen as shown in (b) in FIG. 13. In this connection, the controller 1150 may control the display unit to display multiple menus as a list or icons. Additionally, when the menu includes a hidden menu, the controller 1150 may the display unit to display an image indicating that the hidden menu exists on the icon of the corresponding menu.

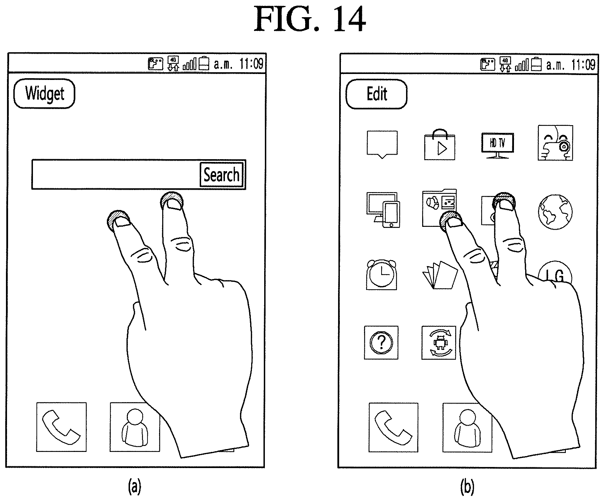

Next, when a multi-touch occurs at two mutually spaced positions on the touch panel 1133 during the mode display screen is output in an operation 1211, the controller 1150 detects this multi-touch at an operation 1213. In this connection, as shown in FIG. 14, at a specific point in time, two single touches are generated at different positions respectively, and the controller 1150 detects this situation as the multi-touch. In this connection, the controller 1150 may detect the multi-touch on the background image of the idle screen as shown in (a) in FIG. 14. Alternatively, the controller 1150 may detect the multi-touch on the icons of the specific menus as shown in (b) in FIG. 14. Furthermore, when two single touches are sequentially detected, the controller 1150 may consider this event as the multi-touch. That is, when a single touch is detected at a specific position of the touch panel 1133, then a single drop is not detected at the corresponding position within a predetermined time interval, but another single touch is detected at another position, the controller 1150 may consider this event to be multi-touch.

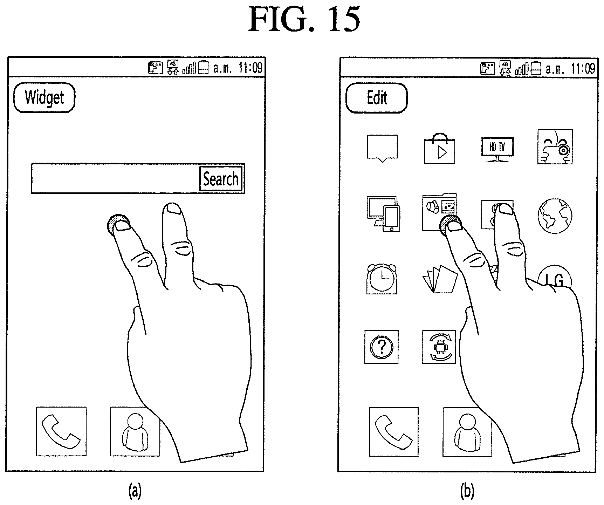

Next, when the multi-touch is detected in an operation 1213 and a single drop occurs in any one of the positions corresponding to the multi-touch on the touch panel 1133, the controller 1150 detects this event in an operation 1215. In this connection, as shown in FIG. 15, the controller 1150 senses a single touch held at one of the positions corresponding to the multi-touch and senses a single drop occurring at another position of the positions corresponding to the multi-touch. In this connection, the controller 1150 may detect a single drop on the background image of the idle screen as shown in (a) FIG. 15. Alternatively, the controller 1150 may detect a single drop on the icon of the specific menu, as shown in (b) in FIG. 15. In addition, the controller 1150 may distinguish between a main position and a sub position among positions corresponding to multi-touch. In this connection, the controller 1150 may determine, as the main position, one of the positions where the single touch is held among the positions corresponding to the multi-touch, and determine, as the sub position, the other position in which the single drop is detected.

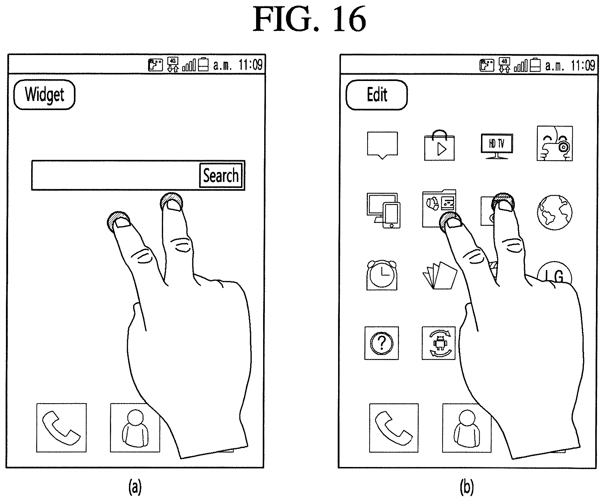

Subsequently, when a multi-touch occurs at two mutually spaced positions on the touch panel 1133 after sensing a single drop in the operation 1215, the controller 1150 detects this event in an 1217 operation. In this connection, the controller 1150 detects, as the multi-touch, an event where while a single touch is maintained, another single touch occurs as shown in FIG. 16. In this connection, the controller 1150 may detect the multi-touch on the background image of the idle screen as shown in (a) in FIG. 16. Alternatively, the controller 1150 may detect the multi-touch on the icons of the specific menus as shown in (b) in FIG. 16. Thereafter, the controller 1150 determines whether or not there is a displayable hidden menu based on the operation mode in an operation 1219.

In this connection, the controller 1150 determines the hidden menu based on the main position in the mode display screen. In this connection, the hidden menu includes an attribute menu for setting an attribute in the idle mode. Alternatively, the hidden menu includes a sub-menu of the menu corresponding to the icon of the main position in the menu display mode.

Subsequently, when it is determined that the hidden menu exists in the operation 1219, a multi-drop occurs at positions corresponding to the multi-touch on the touch panel 1133 or a single drop occurs. Thus, the controller 1150 detects this event in an operation 1221. In this connection, when two single drops are sequentially detected at positions corresponding to the multi-touch, the controller 1150 may consider this event to be a multi-drop. That is, when a single drop is detected in one of the positions corresponding to the multi-touch on the touch panel 1133 and another single drop is detected in the other position of the positions corresponding to the multi-touch, the controller 1150 may consider this event to be a multi-drop.

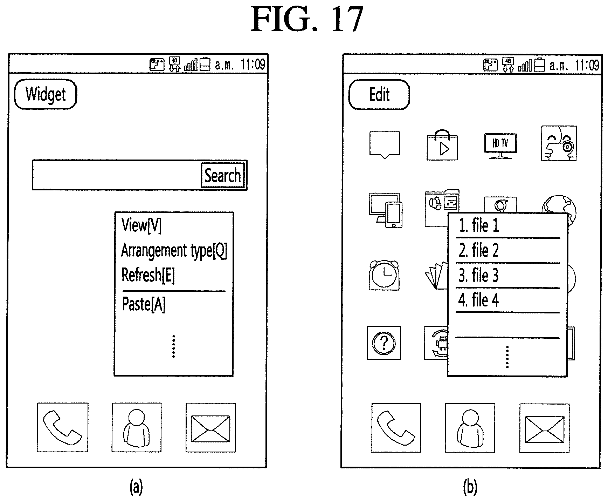

Alternatively, when a single touch is maintained at the main position and a single drop occurs at the sub-position, the controller 1150 may consider this event to be a single drop. The controller 1150 then displays a hidden menu on the mode display screen of the display unit 1131 at an operation 1223. In this connection, the controller 1150 displays the hidden menu according to the operation mode as shown in FIG. 17. In this connection, the controller 1150 may display the hidden menu on the display unit 1131 in a drop down manner or in a pop-up manner in some regions of the mode display screen. That is, the controller 1150 may display an attribute menu along with the background image on the idle screen as shown in (a) FIG. 17. Alternatively, the controller 1150 may control the display unit 1131 to display at least some of the icons as well as a sub-menu of the menu corresponding to the icon of the sub-position on the menu display screen, as shown in (b) in FIG. 17.

Finally, when a single tap occurs at the specific position of the touch panel 1133 during the hidden menu display in the operation 1223, the controller 1150 detects this event in an 1225 operation. The controller 1150 then determines whether the position corresponding to the single tap corresponds to a hidden menu in an 1227 operation. Furthermore, when it is determined that the position corresponding to the single tap corresponds to the hidden menu in the 1227 operation, the controller 1150 executes the hidden menu at an 1229 operation and then terminates the menu display procedure. In this connection, the controller 1150 may set or change the attribute of the idle mode. Alternatively, the controller 1150 may execute a submenu of a menu corresponding to the icon of the main position. In one example, when it is determined that the position corresponding to the single tap does not correspond to the hidden menu in the 1227 operation, the controller 1150 removes the hidden menu from the mode display screen of the display unit 1131 in an operation 1231 and then terminates the menu display procedure. That is, when a single tab is detected on the background image of the idle screen, the controller 1150 may remove the attribute menu from the idle screen. Alternatively, when a single tab is detected on the icons of the menu display screen or on the space between the icons, the controller 1150 may remove the submenus from the menu display screen.

In one example, when the multi-touch is detected in the operation 1217 and it is determined that there is no hidden menu in the operation 1219, the controller 1150 terminates the menu display procedure. Alternatively, when the multi-touch is not detected in the operation 1217 and the multi-drop occurs in positions corresponding to the multi-touch on the touch panel 1133, the controller 1150 detects this event in an 1233 operation. That is, when a single drop is detected in one of the positions corresponding to the multi-touch in the operation 1215 and another single drop is detected in the other position of the positions corresponding to the multi-touch in the operation 1233, the controller 1150 may consider this event to be a multi-drop. The controller 1150 then terminates the menu display procedure.

In one example, when the multi-touch is not detected in the operation 1213 during the mode display screen is output in the operation 1211, the controller 1150 may perform the corresponding function in an operation 1235. That is, the controller 1150 may perform a predetermined function corresponding to at least one combination of touch, tab, drag, or drop on the touch panel 1133. In this connection, when a single touch is detected at the specific position of the touch panel 1133, and a single drop is detected at the corresponding position within a predetermined time interval, the controller 1150 may perform a function corresponding to the corresponding position. In this connection, when a menu exists at the corresponding position, the controller 1150 may execute the menu.

In one example, in the embodiment described above, an example was set forth in which when the mobile terminal senses the multi-touch at mutually spaced positions of the touch panel and then detects a single drop at one of the positions corresponding to the multi-touch, the mobile terminal distinguishes the main position from the sub position. However, the present invention is not limited thereto. In other words, the present disclosure may be realized by distinguishing between the main position and the sub position among the positions corresponding to the multi-touch according to a predetermined setting in the mobile terminal. For this purpose, the mobile terminal may preset and store whether the user is left-handed or right-handed according to another embodiment of the present disclosure. Further, the mobile terminal may further include an acceleration sensor according to another embodiment of the present disclosure. In this connection, the acceleration sensor measures a posture of the mobile terminal, e.g., a direction, an angle relative to the ground, etc. In this connection, it is assumed that the touch panel defines the X axis and the Y axis.

In another embodiment of the present disclosure, when the multi-touch is detected at mutually spaced positions of the touch panel during a mode display screen is output, the mobile terminal grasps the coordinates of positions corresponding to the multi-touch. In this connection, the mobile terminal may determine (x1, y1) and (x2, y2) positions corresponding to the multi-touch. Furthermore, the mobile terminal determines either the X or Y axis of the touch panel which is directed vertically. Further, the mobile terminal checks whether the user is set to be left-handed or right-handed. The mobile terminal then compares the coordinates of the corresponding positions of the multi-touches to determine the main position and sub position.

That is, when it is determined that the Y axis of the touch panel is directed vertically, and when the user is set to be left-handed, the mobile terminal determines, as the main position, the position corresponding to the relatively large value between x1 and x2. Alternatively, when the Y-axis of the touch panel is determined to be oriented vertically and the user is set to be right-handed, the mobile terminal determines, as the main position, a position corresponding to a relatively small value between x1 or x2. In one example, when the X axis of the touch panel is determined to be oriented vertically and the user is set to be left-handed, the mobile terminal determines, as the main position, the position corresponding to the relatively large value between y1 or y2. Alternatively, when it is determined that the X axis of the touch panel is determined to be oriented vertically and the user is set to be right-handed, the mobile terminal determines, as the main position, the position corresponding to the relatively small value between y1 or y2. However, since the increasing direction along the X axis and the Y axis depends on the directionality in designing the touch panel, a large value or small value may be set to a reference of a coordinate value size for comparing the main position and the sub position.

According to the present disclosure, the mobile terminal may easily display a menu representing the desired function of the mobile terminal. In other words, the mobile terminal may determine and display the hidden menu based on whether the user gesture is the multi-touch, single drop, or single touch. Thus, the user may easily access a specific function. In other words, the sequential display of multiple menus which was conventionally conducted in order that the user accesses the desired function on the mobile terminal may be avoided. Therefore, it is possible to reduce the number of touch manipulations that a user of the mobile terminal must perform in order to retrieve the desired function. This can improve the convenience for the user of the mobile terminal and improve the utilization efficiency of the mobile terminal.

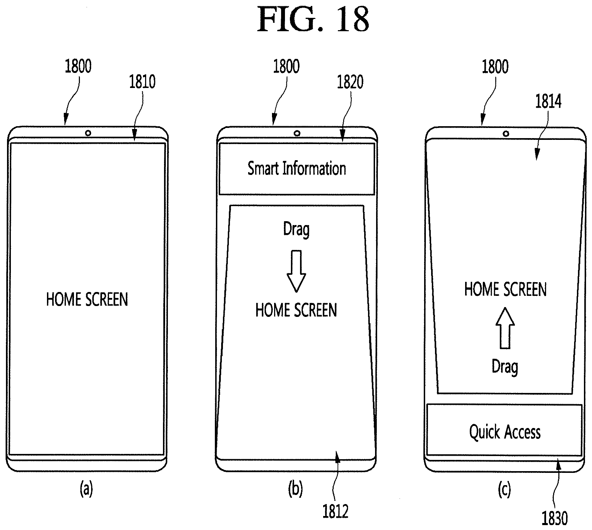

FIG. 18 to FIG. 26 illustrate various examples in which a mobile terminal outputs a plurality of home screens via a drag operation according to another embodiment of the present disclosure.

As shown in (a) in FIG. 18, the mobile terminal 1800 according to another embodiment of the present disclosure may display a first home screen 1810 on the display unit in the power-on state. The first home screen 1810 may include a screen where the main menu of a typical smart phone is displayed, a main screen, etc. Further, although not shown in FIG. 18, the first home screen 1810 may include an icon of an application installed by the user on the mobile terminal 1800.

The user may touch a first region of the touch screen of the display unit where the first home screen 1810 is displayed and then perform a drag operation in a downward direction. In this case, as shown in (b) in FIG. 18, the mobile terminal 1800 may display a second home screen 1812. The second home screen 1812 may have a form of a 3D image corresponding to the first home screen 1810 as a 2D image. Further, the second home screen 1812 may include the same application icon as in the first home screen 1810 or the same content as in the first home screen 1810. Further, the second home screen 1812 may take a form in which the first home screen 1810 shifts in the drag direction. Further, the mobile terminal 1800 may display an information widget 1820 on a top region of the second home screen 1812 while displaying the second home screen 1812. On the information widget 1820, the widget screens of the user-defined applications may be displayed sequentially. Further, the information widget 1820 may display information that the user has predetermined. While the second home screen 1812 is displayed and when the user drags upwards in a state that the user touches one region of the second home screen 1812, as shown in (a) in FIG. 18, the information widget 1820 may disappear and the first home screen 1810 may be displayed on the display unit.

Further, the user may touch the first region of the touch screen of the display unit where the first home screen 1810 is displayed, and then perform an operation of dragging in the upward direction. In this case, as shown in (c) in FIG. 18, the mobile terminal 1800 may display a third home screen 1814. The third home screen 1814 may have a form of a 3D image corresponding to the first home screen 1810 as a 2D image. Further, the third home screen 1814 may include the same application icon or the same content as in the first home screen 1810. Further, the third home screen 1814 may take a form in which the first home screen 1810 shifts in the drag direction. Further, the mobile terminal 1800 may display an menu widget 1830 on a bottom region of the third home screen 1814 while displaying the third home screen 1814. On the menu widget 1830, the icons of the user-defined applications may be displayed sequentially. Further, the menu widget 1830 may display deep link icons that allow the user to directly enter the specific menus of the user-predefined applications. When the user drags down on the third home screen 1814 in the state in which the user touches one region of the third home screen 1814, as shown in (c) in FIG. 18, the menu widget 1830 disappears and the first home screen 1810 may be displayed on the display unit.

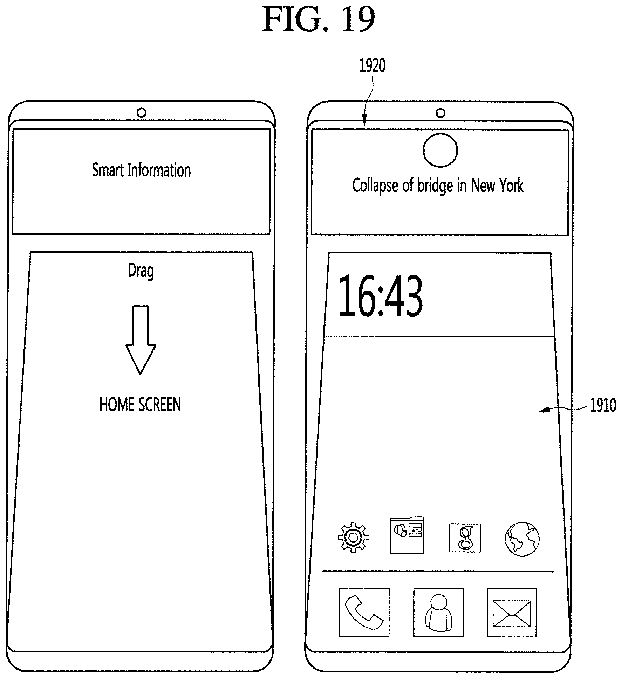

For example, as shown in FIG. 19, the controller of the mobile terminal 1800 may control the display unit to display the second home screen 1910 and the information widget 1920 when the drag operation is detected by the controller. In this connection, the information widget 1920 may display real-time news information from news applications.

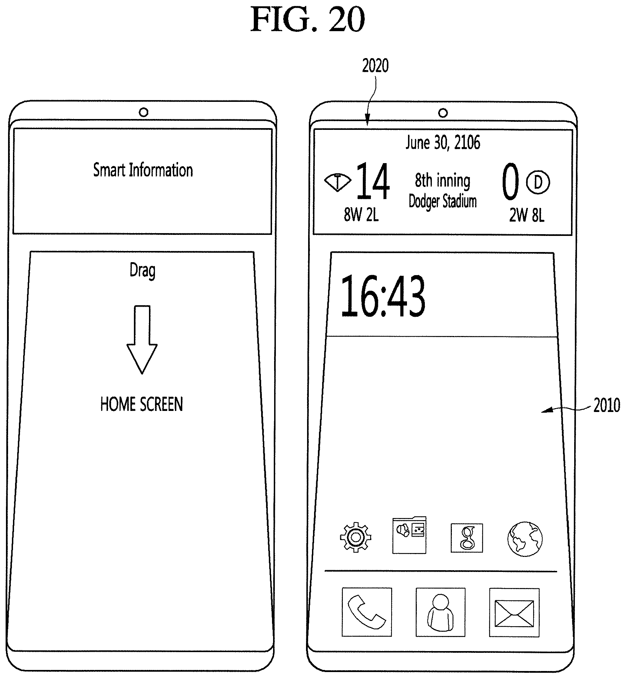

Further, for example, as shown in FIG. 20, the controller of the mobile terminal 1800 may control the display unit to display the second home screen 2010 and the information widget 2020 on the display unit when the drag operation is detected by the controller. In this connection, the information widget 2020 may display real-time sports event information from sports event applications.

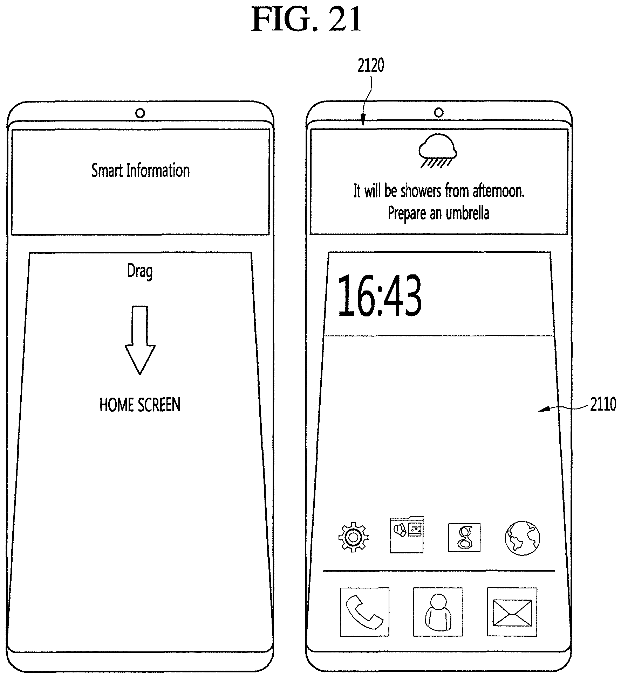

Further, for example, as shown in FIG. 21, the controller of the mobile terminal 1800 may control the display unit to display the second home screen 2110 and the information widget 2120 on the display unit when the drag operation is detected by the controller. In this connection, the information widget 2120 can display real-time weather information from weather applications.

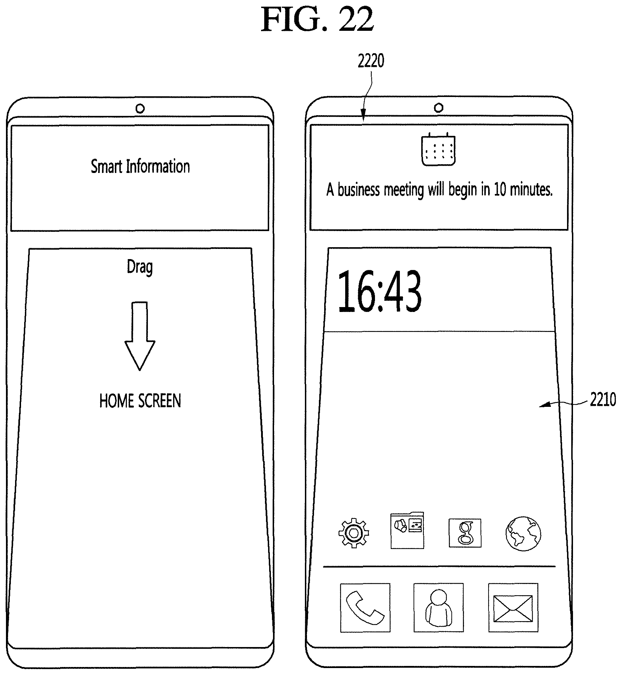

Further, for example, as shown in FIG. 22, the controller of the mobile terminal 1800 may control the display unit to display the second home screen 2210 and the information widget 2220 on the display unit when the drag operation is detected by the controller. In this connection, the information widget 2220 may display real-time schedule information from a specific application.

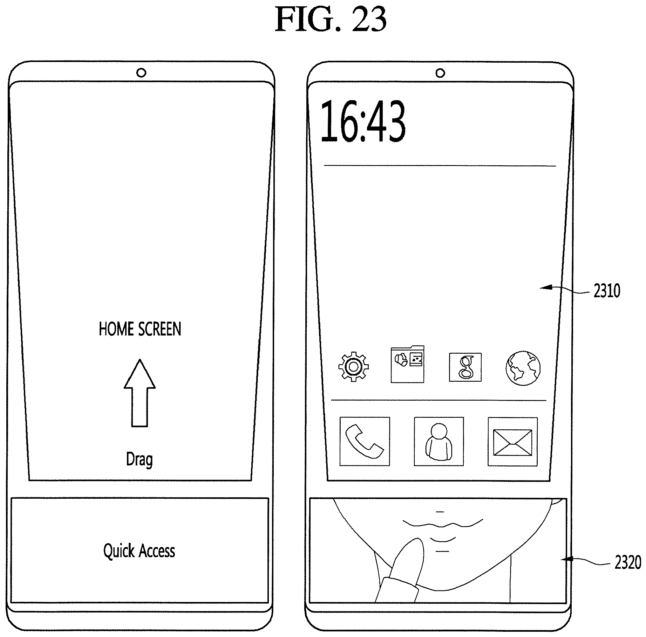

Further, for example, as shown in FIG. 23, the controller of the mobile terminal 1800 may control the display unit to display the third home screen 2310 and the menu widget 2320 on the display unit when the drag operation is detected by the controller. In this connection, the menu widget 2320 may display the mirror function menu using the front camera of the mobile terminal 1800.

Further, for example, as shown in FIG. 23, the controller of the mobile terminal 1800 may control the display unit to display the third home screen 2310 and the menu widget 2320 on the display unit when the drag operation is detected by the controller. In this connection, the menu widget 2320 may display the mirror function menu using the front camera of the mobile terminal 1800.

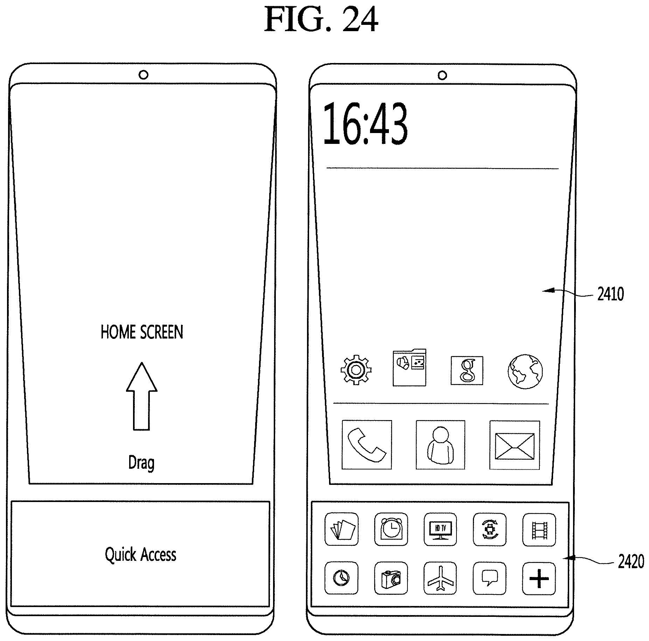

Further, for example, as shown in FIG. 24, the controller of the mobile terminal 1800 may control the display unit to display the third home screen 2410 and the menu widget 2420 on the display unit when the drag operation is detected. In this connection, the menu widget 2420 may sequentially display the user-predefined favorite icons or the icons of the user-predefined applications. In this connection, the icons may be arranged in order of user use frequencies thereof.

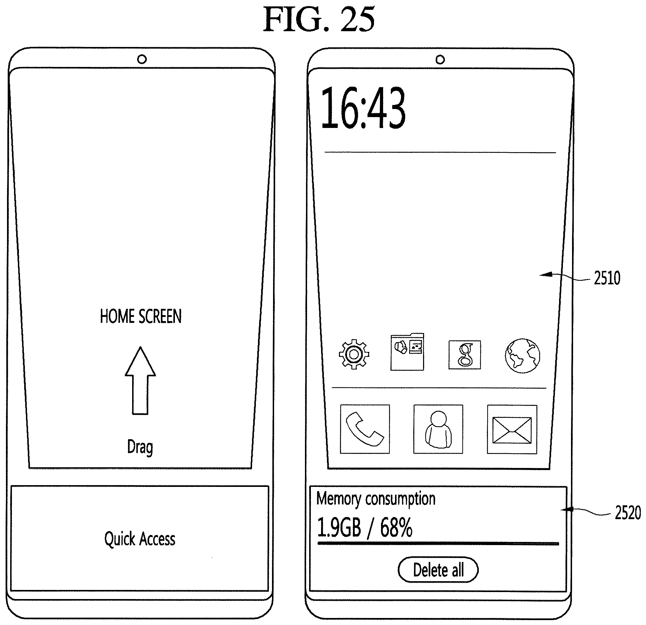

Further, for example, as shown in FIG. 25, the controller of the mobile terminal 1800 may control the display unit to display the third home screen 2510 and the menu widget 2520 on the display unit when the drag operation is detected. In this connection the menu widget 2520 may display the system memory management menu of the mobile terminal 1800. In this connection, the user may clean up the memory using the menu widget 2520.

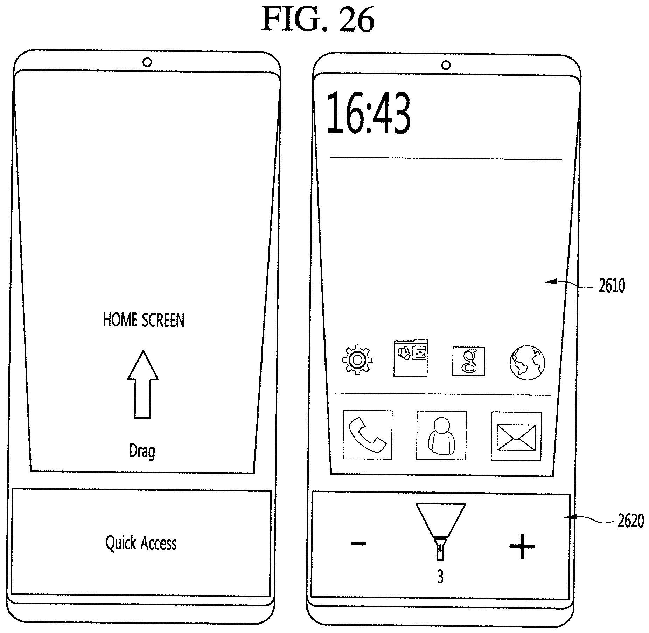

Further, for example, as shown in FIG. 26, when the controller of the mobile terminal 1800 detects a drag operation, the controller may control the display unit to display the third home screen 2610 and menu widget 2620 on the display unit. In this connection, the menu widget 2620 may display a flashlight menu using the flashlight positioned at the rear of the mobile terminal 1800. In this connection, the user may control the flashlight to be turned on/off and brightness thereof using the menu widget 2620.

The user of the mobile terminal 1800 may select the type of the information widget or menu widget by dragging in a left or right direction in the state where the second home screen or the third home screen is displayed.

According to one embodiment of the present disclosure, the above-described method may be implemented using a code that the processor can read from a medium on which a program is recorded. Examples of media that the processor may read include ROM, RAM, CD-ROM, magnetic tape, floppy disk, optical data storage, etc. Further, the media may include a carrier wave (for example, transmission via Internet).

It is to be understood that the mobile terminal as described above may not be limited to the configuration and method of the described embodiments, but the embodiments may include various modifications such that all or some of the embodiments may be selectively combined with each other.

## Claims

1. A mobile terminal comprising:
a display unit;
a touch screen for detecting drag input and touch input; and
a controller configured for controlling an operation of the mobile terminal,
wherein the controller is configured to:
control the display unit to display a 2-dimensional (2D) image of a first home screen thereon;
detect, using the touch screen, a drag trace from a first point to a second point on the first home screen; and
convert the 2D image of the first home screen into a 3-dimensinal (3D) image of the first home screen and control the display unit to display the 3D image thereon.

2. The mobile terminal of claim 1, wherein when a drag direction from the first point to the second point is downwards, the 3D image of the first home screen is a second home screen,
wherein the controller is configured to control the display unit to display an information widget near a top of the second home screen.

3. The mobile terminal of claim 2, wherein the first home screen and the second home screen contain the same content.

4. The mobile terminal of claim 2, wherein the information widget displays at least one of real-time news information, sports broadcast information, weather information, and schedule information.

5. The mobile terminal of claim 1, wherein when a drag direction from the first point to the second point is upwards, the 3D image of the first home screen is a third home screen,
wherein the controller is configured to control the display unit to display a menu widget near a bottom of the third home screen.

6. The mobile terminal of claim 5, wherein the first home screen and the third home screen contain the same content.

7. The mobile terminal of claim 5, wherein the menu widget displays at least one of a mirror function menu, a favorites application list menu, a system memory menu, and a flashlight menu.

8. The mobile terminal of claim 1, wherein when the touch screen senses a drag trace from a third point to a fourth point on the 3D image of the first home screen, and when a drag direction from the third point to the fourth point is opposite to a drag direction from the first point to the second point, the controller is configured to convert back the 3D image to the 2D image of the first home screen and control the display unit to display the 2D image.

9. A method for controlling a mobile terminal, the method comprising:
displaying a 2-dimensional (2D) image of a first home screen on a display unit;
detecting a drag trace from a first point to a second point on the first home screen; and
converting the 2D image of the first home screen into a 3-dimensinal (3D) image of the first home screen and displaying the 3D image on the display unit.

10. The method of claim 9, wherein when a drag direction from the first point to the second point is downwards, the 3D image of the first home screen is a second home screen,
wherein the method further includes displaying an information widget near a top of the second home screen.

11. The method of claim 10, wherein the first home screen and the second home screen contain the same content.

12. The method of claim 10, wherein the information widget displays at least one of real-time news information, sports broadcast information, weather information, and schedule information.

13. The method of claim 9, wherein when a drag direction from the first point to the second point is upwards, the 3D image of the first home screen is a third home screen,
wherein the method further includes displaying a menu widget near a bottom of the third home screen.

14. The method of claim 13, wherein the first home screen and the third home screen contain the same content.

15. The method of claim 13, wherein the menu widget displays at least one of a mirror function menu, a favorites application list menu, a system memory menu, and a flashlight menu.
